# EUROPEAN PATENT SPECIFICATION

(11) **EP 4 658 693 B1**
(45) Date of publication and mention of the grant of the patent: **22.04.2026**
(21) Application number: 24708412.2
(22) Date of filing: 28.02.2024
(51) Int. Cl.: C08F 222/10, C08F 290/06, C08K 3/34, C09J 4/00, C09J 4/06

(54) **METHACRYLATE-BASED ADHESIVE COMPOSITIONS**
KLEBSTOFFZUSAMMENSETZUNGEN AUF METHACRYLATBASIS
COMPOSITIONS ADHÉSIVES À BASE DE MÉTHACRYLATE

(30) Priority: 03.03.2023 GB 202303175
(43) Date of publication of application: 10.12.2025
(73) Proprietor: Scott Bader Company Limited, Wellingborough, Northamptonshire NN29 7 RL (GB)
(72) Inventor: OWEN, Richard, Wellingborough Northamptonshire NN29 7RL (GB); PAGE, Tymon, Wellingborough Northamptonshire NN29 7RL (GB); BUGG, Dean, Wellingborough Northamptonshire NN29 7RL (GB); HARRIS, David, Wellingborough Northamptonshire NN29 7RL (GB); REN, Xiaolin, Wellingborough Northamptonshire NN29 7RL (GB)
(74) Representative: Mewburn Ellis LLP
(86) International application number: PCT/EP2024/055066
(87) International publication number: WO 2024/184147

(56) References cited:
- CN-A- 111 394 013
- JP-A- 2006 002 012
- US-A1- 2012 302 695

## Description

### Field of the Invention

The present invention relates to an adhesive composition for a multi-part adhesive system (in particular, a two-part adhesive system), a multi-part adhesive system and a two-part adhesive system.

### Background

Polymerizable vinyl adhesive compositions that are useful for adhesive applications are well known in the art. Prior art compositions include formulations based on acrylate and methacrylate monomers, styrene monomer and styrene derivatives as well as polyester and vinyl ester resins.

The compositions are generally liquids or pastes that polymerize to a solid mass when two separately packaged components, one of which contains a polymerization initiator, generally a peroxide, and the other of which contains a promoter, generally an amine, are mixed just prior to use. The polymerisation process is generally referred to as "curing" by those skilled in the art, with different combinations of initiators and promoters being referred to as different "cure systems".

A particularly useful group of polymerizable vinyl compositions comprises mixtures of dissolved or dispersed polymers in acrylate or methacrylate monomers. Such compositions can provide a number of performance benefits for adhesive bonding and related applications, including high bond strength, adhesion to a variety of materials with minimal surface preparation, and rapid curing. Methyl methacrylate is a preferred monomer for these adhesives because it is relatively low in cost and provides high strength properties in formulated compositions. This group of polymerizable compositions is recognized by those skilled in the art as being superior in many respects to those based on polyester resins and vinyl ester resins, particularly in terms of their ductility and adhesion to a variety of material surfaces.

Adhesive compositions employing a peroxide as the polymerization initiator and containing (meth)acrylate functional monomers and oligomers can suffer from the problem of oxygen inhibition. Oxygen inhibition occurs when free radicals, formed during the polymerization process, react with atmospheric oxygen to form stable peroxy radicals. These peroxy radicals can result in a reduced crosslink density (i.e. ineffective curing) at the surface of the cured adhesive composition leading to a "tacky" finish on the cured adhesive and consequently a poor surface finish.

WO2011/104510A describes an adhesive composition, especially suitable for a two-part adhesive system, curable via free radical polymerization and containing a (meth)acrylate ester monomer, chlorinated elastomeric polymer, core-shell impact modifier and a urethane (meth)acrylate oligomer. WO2011/104510A also describes that adhesive compositions that cure by a free radical mechanism generate heat during the curing stage, as a result of the exothermic free radical reaction. If the curing adhesive becomes too hot, unreacted components within (especially any unreacted methyl methacrylate monomer) may boil, resulting in gassing or void formation within the adhesive joint, which in turn gives rise to a weaker bond. WO2011/104510A goes on to explain that exotherm-suppressing techniques (to avoid boiling of unreacted components) can increase undesirable side reactions, especially air inhibition of cure.

US 2012/302695 A1 relates to an adhesive composition, especially suitable for a two-part adhesive system curable via free radical polymerisation comprises a (meth)acrylate ester monomer, a chlorinated elastomeric polymer, a core-shell impact modifier and a urethane (meth)acrylate oligomer. Wax is also used in the composition.

Consequently, there remains a need within the art for improvements in (meth)acrylate-based adhesives towards adhesives that exhibit an enhanced combination of properties. In particular, to adhesives that exhibit good surface performance (in particular, reduced surface tackiness of the cured adhesive), mechanical performance, and adhesive strength.

### Summary of the Invention

According to a first aspect there is provided an adhesive composition for a multi-part adhesive system, the adhesive composition being curable via free radical polymerisation and comprising:
(A) a (meth)acrylate ester monomer;
(B) from 1.0 to 7.0 wt. %, based on the total weight of the adhesive composition, of a urethane (meth)acrylate oligomer;
(C) from 0.5 to 6.0 wt. %, based on the total weight of the adhesive composition, of an organoclay;
(D) a trivalent organophosphorus compound; and
(E) an anti-tack agent for forming a film on the surface of the adhesive composition, wherein the anti-tack agent is a wax.

Surprisingly, the inventors have found that adhesive compositions according to the first aspect provide an enhanced combination of properties. In particular, adhesive compositions according to the first aspect provide an enhanced surface performance of the cured adhesive, namely reduced surface tackiness. The reduction in surface tackiness is shown by an elevated Shore D hardness of the top surface (i.e. the surface open to air during cure), and also a smaller difference between the Shore D hardness of the bottom surface (i.e. the surface not open to air during cure) and the Shore D hardness of the top surface. The reduction in surface tackiness is also demonstrated by the resultant cured adhesives having enhanced abradability. For example, this can assist in subsequently applying a coating (e.g. a paint) to the surface. Alongside providing an enhanced surface performance, the adhesive compositions of the first aspect provide good mechanical performance and adhesive strength. Adhesive strength is particularly noteworthy in respect of bonding to aluminium.

In a second aspect of the invention there is provided a multi-part adhesive system comprising a plurality of parts, which in combination contains the adhesive composition as defined in the first aspect together with
(I) a component capable of initiating free radical polymerisation of the adhesive composition; and
(P) a component capable of promoting the polymerisation,
wherein (I) and (P), and optionally the adhesive composition as defined in the first aspect, are contained in different respective parts of the multi-part adhesive system.

In a third aspect of the invention there is provided a two-part adhesive system comprising first and second parts, which in combination contains the adhesive composition as defined in the first aspect together with
(I) a component capable of initiating free radical polymerisation of the adhesive composition; and
(P) a component capable of promoting the polymerisation,
wherein (I) and (P) are contained in different respective parts of the two-part system.

Preferably, in either the second aspect or the third aspect the component (P) is an amine and the component (I) is a peroxide.

In a fourth aspect of the invention there is provided an adhesive composition for a multi-part adhesive system, the adhesive composition being curable via free radical polymerisation and comprising:
(A) a (meth)acrylate ester monomer;
(B) from 1.0 to 7.0 wt. %, based on the total weight of the adhesive composition, of a urethane (meth)acrylate oligomer; and
(C) from 0.5 to 6.0 wt. %, based on the total weight of the adhesive composition, of an organoclay.

Surprisingly, it has been found that an adhesive composition according to the fourth aspect provides good mechanical properties even when a small amount of urethane (meth)acrylate oligomer is used. Indeed, provision of this comparatively narrow range of organoclay permits access to desirable surface properties alongside mechanical properties.

In a fifth aspect of the invention there is provided use of the adhesive composition according to the first aspect in a structural adhesive.

In a sixth aspect of the invention there is provided use of the adhesive system according to the second aspect as a structural adhesive.

In a seventh aspect of the invention there is provided use of the adhesive system according to the third aspect as a structural adhesive.

In an eighth aspect of the invention there is provided use of the adhesive composition according to the first aspect in bonding any one of the following materials: composites, thermoplastics and metals (preferably, aluminium).

In a ninth aspect of the invention there is provided use of the adhesive system according to the second aspect in bonding any one of the following materials: composites, thermoplastics and metals (preferably, aluminium).

In a tenth aspect of the invention there is provided use of the adhesive system according to the third aspect in bonding any one of the following materials: composites, thermoplastics and metals (preferably, aluminium).

In an eleventh aspect there is provided a method of making an adhesive composition according to the first aspect, wherein at least a (meth)acrylate ester monomer (A), a urethane (meth)acrylate oligomer (B), an organoclay (C), a trivalent organophosphorus compound (D) and an anti-tack agent (E) are combined to provide an adhesive composition.

In a twelfth aspect there is provided use of the adhesive composition according to the first aspect in a multi-part adhesive system (preferably a two-part adhesive system); such that, when cured, the cured adhesive provides:
- a Shore D hardness (top surface) of more than 50, such as more than 55, such as more than 60 when measured in accordance with the method provided in the materials and methods section; and/or
- a Shore D delta (Δ) (Shore D bottom surface hardness minus Shore D top surface hardness) of at most 16, such as at most 14, such as at most 12, wherein the Shore D measurements are measured in accordance with the method provided in the materials and methods section.

Preferably, in the twelfth aspect, the cured adhesive also provides:
- a break strain of least 55 %, such as at least 60 wt %, such as at least 65 wt %, such as at least 70 wt % when measured in accordance with the method provided in the materials and methods section; and /or
- an Aluminium Lap Shear Strength (Al LSS) of at least 12 MPa, such as at least 14 MPa, such as at least 16 MPa when measured in accordance with the method provided in the materials and methods section

In a further aspect there is provided an adhesive composition for a multi-part adhesive system, the adhesive composition being curable via free radical polymerisation and comprising:
(A) from 58 to 70 wt. %, based on the total weight of the adhesive composition, of a (meth)acrylate ester monomer;
(B) from 1.0 to 6.0 wt. %, based on the total weight of the adhesive composition, of a urethane (meth)acrylate oligomer;
and optionally including one or more of (C), (D) and (E) as follows:
(C) an organoclay, suitably a mixed mineral organoclay and/or an organically modified smectite or bentonite clay;
(D) a trivalent organophosphorus compound; and
(E) an anti-tack agent for forming a film on the surface of the adhesive composition, wherein the anti-tack agent is a wax, suitably a paraffin wax,

and wherein the composition includes:
   from 5 to 20wt. %, based on the total weight of the adhesive composition, of a core-shell impact modifier;
and wherein the adhesive composition when cured as part of the multi-part adhesive system (preferably a two-part adhesive system); provides a cured adhesive having:
   - a Shore D hardness (top surface) of more than 50, such as more than 55, such as more than 60 when measured in accordance with the method provided in the materials and methods section; and/or
   - a Shore D delta (Δ) (Shore D bottom surface hardness minus Shore D top surface hardness) of at most 16, such as at most 14, such as at most 12, wherein the Shore D measurements are measured in accordance with the method provided in the materials and methods section;
and optionally also provides:
   - a break strain of least 55 %, such as at least 60 wt %, such as at least 65 wt %, such as at least 70 wt % when measured in accordance with the method provided in the materials and methods section; and /or
   - an Al LSS of at least 12 MPa, such as at least 14 MPa, such as at least 16 MPa when measured in accordance with the method provided in the materials and methods section

Surprisingly, the inventors have found that the use of a higher level of (meth) acrylate ester monomer (A) as compared to what is taught in the prior art system noted above, in combination with a lower level of urethane (meth)acrylate oligomer (B) as compared to what is taught in the prior art system noted above, can provide the adhesive formulator with access to an adhesive composition having a desirable balance of mechanical and/or surface properties.

The invention includes the combination of the aspects and preferred features described herein except where such a combination is clearly impermissible or expressly avoided.

Preferred embodiments of the invention may also include any one or more of the following preferred features. Preferred features mentioned in relation to the first aspect of the invention may apply equally to the other aspects.

### Detailed Description of the Invention

The term "(meth)acrylate" is extensively used within the art to denote "acrylate or methacrylate" and this well-known abbreviation will be used throughout.

The term "top surface" in the context of Shore D hardness refers to the surface of the adhesive that is open to the air during cure.

The term "bottom surface" in the context of Shore D hardness refers to the surface of the adhesive that is not open to the air during cure.

### (Meth)acrylate ester monomer

A (meth)acrylate ester monomer for component (A) may be any ester of acrylic acid or methacrylic acid known to the art. Examples are esters of C₁-C₆ monofunctional alcohols with (meth)acrylic acid, (such as methyl acrylate, methyl methacrylate, ethyl acrylate or methacrylate, n-propyl or isopropyl acrylates or methacrylates, butyl (meth)acrylates (all isomers)) and hexyl (meth)acrylates, esters of higher molecular weight alcohols having up to about 12 carbon atoms (such as lauryl (meth)acrylate, 2-ethylhexyl (meth)acrylate, hexyl (meth)acrylate, isodecyl (meth)acrylate and the like), esters of cycloaliphatic alcohols (such as cyclohexyl (meth)acrylate), hydroxy-functional (meth)acrylate esters of di/poly-functional alcohols (such as hydroxyethyl (meth)acrylate, hydroxypropyl (meth)acrylate or pentaerythritol tri(meth)acrylate), di/poly-esters of di/poly-functional alcohols (such as ethylene glycol di(meth)acrylate, 1,3 or 1,4-butanediol di(meth)acrylate, 1,6-hexanediol di(meth)acrylate, or trimethylolpropane tri(meth)acrylate), or (meth)acrylate esters formed by alcohols bearing other functional groups (such as tetrahydrofurfuryl (meth)acrylate or benzyl (meth)acrylate). Component (A) may also comprise a combination of two or more such monomers.

Preferred (meth)acrylate monomers are esters of C₁-C₄ monofunctional alcohols with (meth)acrylic acid, and methacrylate esters are particularly preferred. Preferably, the (meth)acrylate ester monomer (A) comprises at least one (meth)acrylate ester of a C1-C4 monofunctional alcohol.

Methyl methacrylate is especially preferred. Preferably, the (meth)acrylate ester monomer (A) comprises methylmethacrylate. Most preferably component (A) comprises at least 50wt% of esters of C₁-C₄ monofunctional alcohols, especially at least 50wt% of methylmethacrylate, most preferably at least 70wt% methylmethacrylate.

The (meth)acrylate ester monomer as component (A) may be present in an amount, based on the total weight of the adhesive composition, of from 40 to 70 wt %, such as from 45 to 70 wt %, such as from 50 to 70 wt %. More preferably, the (meth)acrylate ester monomer as component (A) is present in an amount, based on the total weight of the adhesive composition of from 50 to 65 wt %, such as from 55 to 65 wt %, such as from 58 to 65 wt %.

The (meth)acrylate ester monomer as component (A) may be present in an amount, based on the total weight of the adhesive composition, of at least 40 wt %, such as at least 45 wt %, preferably at least 50 wt %, such as at least 55 wt %, such as at least 58 wt %.

The (meth)acrylate ester monomer as component (A) may be present in an amount, based on the total weight of the adhesive composition, of at most 75 wt %, such as at most 70 wt %, such as at most 65 wt %.

### Urethane (meth)acrylate oligomer

A urethane (meth)acrylate oligomer included as component (B) may be any of the type familiar to those skilled in the adhesives industry.

In general, urethane (meth)acrylate oligomers are usually the reaction products of an isocyanate component containing at least two isocyanate functional groups with a (meth)acrylate component containing at least one (meth)acrylate functional group and at least one group (such as hydroxyl or amino) reactive with the isocyanate functional group. Thus, for example, a simple type of urethane methacrylate oligomer could be prepared by reacting two moles of hydroxyethyl methacrylate with one mole of toluene 2,4-diisocyanate.

Preferably, the urethane (meth)acrylate oligomer is the reaction product of:
(i) a di- or higher isocyanate having at least two isocyanate groups;
(ii) a chain-extending reagent which has at least two groups selected from hydroxyl and/or amino groups, each capable of reaction with an isocyanate group of (i);
(iii) a hydroxymethacrylate component or a hydroxyacrylate component.

The isocyanate component may also be a prepolymer, formed by the reaction of a stoichiometric excess of an isocyanate containing at least two isocyanate functional groups with a chain-extending compound containing two or more functional groups (such as hydroxyl or amino) reactive with the isocyanate functional groups. One example of a chain-extending group is a polyether diol such as polyethylene glycol. Another example is amine terminated polyethers.

Thus, for example, a type of prepolymer isocyanate component could be prepared by reacting two moles of toluene 2,4-diisocyanate with one mole of a polyethylene glycol (these are commercially available in a variety of molecular weights). The resulting prepolymer could then be reacted with two moles of hydroxyethyl methacrylate to give the urethane methacrylate oligomer, which would have a theoretical structure A-X-Y-X-A, in which A is the acrylate component, X is the diisocyanate and Y is the polyethylene glycol chain-extender.

Urethane (meth)acrylates useful in the adhesive compositions of the invention may be of the simple (A-X-A) type or the chain-extended (A-X-Y-X-A) type. Those of the chain-extended type are preferred.

A greater or lesser degree of chain extension can be achieved by controlling the relative amounts of isocyanate (X) and polyol chain-extender (Y) to provide a theoretical structure A-(X-Y)ₙ-X-A where n is usually in the range of 1 to 5. Preferred urethane (meth)acrylate oligomers have a theoretical structure in which n = 1. (As is well understood by those skilled in the art, the preparation of products of this nature inevitably results in a mixture of molecular structures with differing molecular weights, having a variety of values of n. The relative proportion of isocyanate (X) and polyol chain-extender (Y) determines the average value of n for what is in practice, a mixture of similar oligomer structures. Hence "preferred urethane (meth)acrylate oligomers have a theoretical structure in which n = 1" refers to such a mixed product in which the average value of n is 1.

In addition, as is well understood in the field of urethane (meth)acrylates an oligomer is a molecule having a relatively large molecular weight obtained by reaction of molecules having lower molecular weights; the oligomer may in some instances contain a small number of repeating sequences of the lower molecular weight molecules. Example urethane (meth)acrylate oligomers typically have a weight average molecular weight Mw below about 25,000 and particularly below about 20,000 and a number average molecular weight Mn below about 10,000 and especially below about 7,500.

The urethane (meth)acrylate oligomer as component (B) is present, based on the total weight of the adhesive composition, in an amount from 1.0 to 7.0 wt %.

Surprisingly, it has been found that reducing the amount of urethane (meth)acrylate oligomer in an adhesive composition provides an enhanced surface performance of the cured adhesive. In particular, a reduced tackiness of the cured adhesive is provided as shown by an elevated Shore D hardness of the top surface (i.e. the surface open to air during cure), and also a smaller difference between the Shore D hardness of the bottom surface (i.e. the surface not open to air during cure) and the Shore D hardness of the top surface. Enhanced abradability is also provided.

Preferably, the urethane (meth)acrylate oligomer as component (B) is present, based on the total weight of the adhesive composition, in an amount from 1.0 to 6.5 wt %, such as from 1.0 to 6.0 wt %. More preferably, the urethane (meth)acrylate oligomer as component (B) is present, based on the total weight of the adhesive composition, in an amount from 1.5 to 6.5 wt %, such as from 1.5 to 6.0 wt %, such as 1.5 to 5.5 wt %, such as 1.5 to 5.0 wt %

The urethane (meth)acrylate oligomer as component (B) may be present in an amount, based on the total weight of the adhesive composition, of at least 1.0 wt %, such as at least 1.5 wt %, such as at least 2.0 wt %.

The urethane (meth)acrylate oligomer as component (B) may be present in an amount, based on the total weight of the adhesive composition, of at most 7.0 wt %, such as at most 6.5 wt %, such as at most 6.0 wt %, such as at most 5.5 wt %, such as at most 5.0 wt %, such as at most 4.5 wt %.

### Chain-extending reagents

Suitable chain-extending polyols are simple diols/polyols (such as ethylene glycol, diethylene glycol, triethylene glycol, tetraethylene glycol, propylene glycol, dipropylene glycol, tripropylene glycol, 1,3 or 1,4-butanediol, neopentyl glycol, 1,6-hexanediol, trimethylolpropane, pentaerythritol and the like) polyether polyols (homopolymers of ethylene oxide or propylene oxide or copolymers of the two, bearing two or more terminal hydroxyl groups, or simple diols/polyols extended by alkoxylation, especially ethoxylation/propoxylation), polyester polyols, polycaprolactone polyols, simple diols/polyols extended by reaction with lactones such as γ-butyrolactone, δ-valerolactone or ε-caprolactone, polytetramethylene glycols or polytetrahydrofurans.

Preferred chain-extending reagents have three or more hydroxyl groups available for reaction with an isocyanate group.

Particularly preferred chain-extending polyols are polyether polyols and polyester polyols.

### Polyether polyols

Especially preferred polyether polyols are alkoxylated (typically ethoxylated and/or propoxylated) derivatives of tri- or higher functional polyols.

Examples of suitable triols include trimethylolethane, trimethylolpropane and glycerol. Examples of tetra-functional polyols include pentaerythritol and ditrimethylolpropane. Hexa-functional polyols include dipentaerythritol and sorbitol.

Preferred polyether polyols are derived from tri- or tetra-functional polyols.

Such chain-extending reagents include ethoxylated and/or propoxylated derivatives of glycerol, ethoxylated and/or propoxylated derivatives of trimethylol propane and, more preferably ethoxylated and/or propoxylated derivatives of pentaerythritol. Such derivatives may contain from about 3 to 60 units of ethylene oxide (EO), propylene oxide (PO) or combinations thereof, for example.

Example polyether polyols suitable for use in the present invention include the alkoxylated range of polyols available from Perstorp Specialty Chemicals, Sweden. This range includes alkoxylated polyols having functionalities of 2,3,4 and 6 with OH values of 150 to 1000 mg KOH/g, and molecular weights ranging from about 150 to 1100 g/mol.

Additional examples of polyetherpolyols are available in the Voranol^{®} range from The Dow Chemical Company. This range includes polyols having OH values of about 25 to 820, and molecular weights ranging from about 255 to 6000 g/mol.

Further example polyether polyols are also available in the Arcol^{®} range of Covestro.

Particularly preferred polyether polyols which are alkoxylated derivatives of tri- or higher functional polyols include aliphatic hydrophilic triols and tetrols in the Simulsol^{®} range from Seppic SA of Paris, France.

The range of hydrophilic triols includes ethoxylated derivatives of trimethylolpropane; the range of tetrols includes ethoxylated and propoxylated derivatives of pentaerythritol.

A particularly suitable example polyether polyol may have a molecular weight in the range 250 to 1100 g/mol.

Furthermore, preferred polyether polyols may have OH values in the range 1000 to 230 mg KOH/g.

Some commercially available products may also be a blend of polyether polyols and, in those cases, the number of (EO)/(PO) units might not be an integer.

Preferred polyetherpolyols for use in the present invention contain from 3 to 30 units of ethylene oxide, propylene oxide, or combinations thereof, more preferably from 3 to 20 such units and especially from 3 to 10 units.

Especially preferred polyether polyols are tri and tetrafunctional polyols which contain a theoretical average of up to 6 (EO)/(PO) units per arm of the polyol, and more preferably up to 3, suitably 0.5 to 3 (EO)/(PO) units per arm. Such units need not be distributed equally to all arms of the polyol.

Particularly preferred polyether polyols have average molecular weights of less than or equal to 1100 g/mol, especially less than or equal to 1000g/mol more preferably less than or equal to 800 g/mol, and particularly preferably from 150 to 800 g/mol.

The following polyether polyols are especially preferred:
3-mole ethoxylate of pentaerythritol
5-mole ethoxylate of pentaerythritol
10-mole ethoxylate of pentaerythritol
20-mole ethoxylate of pentaerythritol
5-mole propoxylate of pentaerythritol
3-mole ethoxylate of trimethylolpropane.

In this regard, urethane (meth)acrylate oligomers derived from (i) a diisocyanate having two isocyanate groups which differ in reactivity; (ii) a chain-extending reagent which is a polyether polyol selected from ethoxylated and propoxylated derivatives of tri- and tetrafunctional polyols; and (iii) a hydroxy (meth)acrylate selected from polyethylene glycol (meth)acrylate and polypropylene glycol (meth)acrylate provide an embodiment of the present invention. In this connection, preferred embodiments of the chain-extending polyol, as described herein in relation to the adhesive composition, also apply to this particular embodiment of the invention.

### Polyester polyols

Example polyester polyols may be obtainable by condensation polymerisation of a polyol with a polycarboxylic acid. However, preferred polyester polyols are obtainable by reaction of a di- or higher functional polyol with a hydroxy-acid or a lactone.

Such preferred polyester polyols are obtainable by polymerisation of a lactone having a 4- to 10-membered ring, more preferably a 5-, 6- or 7-membered ring. Examples include γ-butyrolactone, δ-valerolactone and ε-caprolactone, with ε-caprolactone especially preferred.

Generally lactone polymerisation is performed in the presence of an alcohol to facilitate the polymerisation. This may be a simple monofunctional alcohol, or a diol, or a tri- or higher functional alcohol. Example polyhydric alcohol compounds include sugar alcohols, especially those containing 5 to 6 carbon atoms, such as arabitol, xylitol, ribitol, mannitol, sorbitol, dulatol and idiol.

Particularly preferred polyester polyols are derived from ε-caprolactone and a tri- or higher functional alcohol. Especially preferred polyester polyols are derived from ε-caprolactone and a sugar alcohol. Most preferably a polyester polyol is derived from ε-caprolactone and a hexitol, and especially sorbitol.

Polycaprolactone polyols suitable for use as chain-extending reagents in the present invention are also available from Ingevity, in the CAPA^{®} range. Diols, triols and tetrols are available. The triols are typically derived from trimethylolpropane and the tetrols from pentaerythritol. Preferred polycaprolactone polyols may have a molecular weight of 2000 g/mol, or less.

Particularly preferred polycaprolactone polyols may contain from 3 to 20 caprolactone units in the molecule, preferably from 3 to 10 caprolactone units.

Also preferred polycaprolactone polyols may contain a theoretical average of up to 6 caprolactone units per arm of the polyol, more preferably from 1 to 3 caprolactone units per arm. Such units need not be distributed equally to all arms of the polyol.

Preferred chain-extender polyols, as described above in the categories of both polyether polyols and polyester polyols, are simple diols/polyols extended by ethoxylation/propoxylation or by reaction with ε-caprolactone. Especially preferred as chain-extending polyols are the reaction products of sorbitol with ε-caprolactone and polyethoxylated or polypropoxylated derivatives of pentaerythritol.

Example chain-extending reagents which include two or more terminal amino groups include amine terminated polyethers, based on the polyethers as described above.

Example polyether amines are available from Huntsman Advanced Materials (Switzerland), in the Jeffamine^{®} range. This range includes diamines having backbones based on polyethylene glycol, polypropylene glycol, and mixtures thereof. Triamines are also available, prepared by reaction of propylene oxide with a triol, followed by amination of terminal hydroxy groups. Products of various molecular weights are available in each category. Preferred polyetheramines would have a molecular weight of 1000 g/mol, or less.

### Isocyanate

Suitable di/poly-isocyanates include aliphatic alkylene diisocyanates {such as 1,6-hexamethylene diisocyanate (HDI), 1,4-tetramethylene diisocyanate and 1,12-dodecane diisocyanate, for example}, cyclo aliphatic diisocyanates {such as 1,3-and 1,4-cyclohexane diisocyanates and isophorone diisocyanate (IPDI) and including hydrogenated aromatic diisocyanates such as hydrogenated diphenylmethane diisocyanate (hMDI) hydrogenated toluene diisocyanate (hTDI), hydrogenated tetramethylxylylene diisocyanate (hTMXDI) and hydrogenated polymethylene polyphenyl diisocyanate (hPAPI), for example}, araliphatic diisocyanates {such as tetramethylenexylylene diisocyanate (TMXDI)} and aromatic diisocyanates {such as 2,4- and 2,6- toluene diisocyanate (TDI) and 2,2'-, 2,4'- and 4,4'-diphenylmethane diisocyanates, for example}. Also, modified versions of such diisocyanates may be available, including dimers, trimers (IPDI trimer and HDI trimer are commercially available, for instance), uretidone-modified, urea modified, urethane modified and allophanate-modified diisocyanates. Preferably the isocyanate is a monomeric diisocyanate having a functionality of about 2.

Preferred isocyanates are diisocyanates in which the two isocyanate functional groups are non-equivalent, i.e. the two isocyanate groups do not have equal reactivity. This may be observed in cases where the molecular structure of the diisocyanate is not symmetrical.

Cycloaliphatic, araliphatic and aromatic diisocyanates in which the two isocyanate functional groups differ in their reactivity are further preferred.

Especially preferred are isophorone diisocyanate and toluene 2,4-diisocyanate, with isophorone diisocyanate (IPDI) being the most preferred.

### (Meth)acrylate component

A (meth)acrylate component employed in the preparation of the urethane (meth)acrylate oligomer contains at least one (meth)acrylate functional group and at least one group (such as hydroxyl or amino) which is reactive with an isocyanate group.

A (meth)acrylate component may be any of those familiar from the numerous published syntheses of urethane (meth)acrylate oligomers. Particularly suitable (meth)acrylate components have a hydroxyl group and examples include 2-hydroxyethyl acrylate (HEA), hydroxypropyl acrylate (HPA), 2-hydroxyethyl methacrylate (HEMA), hydroxypropyl methacrylate (HPMA); ethoxylated and/or propoxylated derivatives of HEA, HEMA, HPA or HPMA, and reaction products of HEA, HEMA, HPA and HPMA with lactones, for example such as γ-butyrolactone or ε-caprolactone.

Hydroxy-functional species containing more than one (meth)acrylate functional groups, such as glycerol dimethacrylate and pentaerythritol triacrylate, may also be used. Preferred (meth)acrylate components are HEA, HEMA, HPA, HPMA and the polyethoxylated and/or polypropoxylated derivatives thereof.

Particularly preferred (meth)acrylate components include
polyethylene glycol monoacrylates,
polyethylene glycol monomethacrylates,
polypropylene glycol monoacrylates, and
polypropylene glycol monomethacrylates,
each of which may contain from 3 to 9 or 10 repeating units of ethylene oxide (EO), propylene oxide (PO) or combinations thereof. Preferred components contain 5 to 10, especially 5 or 6 repeating (EO) or (PO) units.

Polyethylene glycol monomethacrylates and polypropylene glycol monomethacrylates are particularly preferred.

Preferred example polyethylene glycol (meth)acrylates have a molecular weight between 200 and 750, and especially between 200 and 550. Preferred example polypropylene glycol methacrylates have a molecular weight between 240 and 960, and especially between 240 and 700.

Examples of suitable components are available from the Bisomer^{™} range from GEO Specialty Chemicals, and the Bimax^{™} range from Gelest.

Particularly preferred are polyethylene glycol monomethacrylate which contains 5 to 10 and especially 5 or 6 repeating (EO) units and polypropylene glycol monomethacrylate which contains 5 to 10 and especially 5 repeating (PO) units (which also corresponds to a tetrapropoxylated derivative of hydroxypropyl methacrylate).

In this regard, urethane (meth)acrylate oligomers derived from (i) a diisocyanate having two isocyanate groups which differ in reactivity; (ii) a chain-extending reagent which is a polyether polyol selected from ethoxylated and propoxylated derivatives of tri- and tetrafunctional polyols; and (iii) a hydroxy (meth)acrylate selected from polyethylene glycol (meth)acrylate and polypropylene glycol (meth) acrylate provide another embodiment of the present invention.

In this connection, the preferred embodiments of
polyethylene glycol monoacrylates,
polyethylene glycol monomethacrylates,
polypropylene glycol monoacrylates and
polypropylene glycol monomethacrylates
described in this section, in relation to the adhesive composition, may also apply to this particular embodiment of the present invention.

Such polyethylene glycol (meth)acrylates and polypropylene glycol (meth)acrylates may be employed in combination with a chain-extending reagent which is a polyether polyol selected from ethoxylated and propoxylated derivatives of tri- and tetra-functional polyols as described above in relation to embodiments of the adhesive composition.

According to some embodiments a preferred (meth)acrylate component is HEA; according to other embodiments a preferred component is a tetrapropoxylated derivative of HPMA.

In a first group of embodiments of the invention a urethane (meth)acrylate oligomer for the adhesive composition may be derived from:
(i) isophorone diisocyanate;
(ii) a polyester polyol obtainable by polymerisation of a lactone, especially ε-caprolactone; and
(iii) hydroxyethyl acrylate.

In a particularly preferred first group of embodiments a urethane (meth)acrylate for the adhesive composition may be derived from:
(i) isophorone diisocyanate;
(ii) a polyester polyol derived from ε-caprolactone and a tri- or higher functional alcohol, especially a sugar alcohol; and
(iii) hydroxyethyl acrylate.

In a second group of embodiments a urethane (meth)acrylate oligomer may be derived from
(i) a diisocyanate selected from isophorone diisocyanate and 2,4-toluene diisocyanate;
(ii) a polyol selected from ethoxylated and propoxylated derivatives of trimethylol propane and ethoxylated and propoxylated derivatives of pentaerythritol; and
(iii) a polyethylene glycol monomethacrylate or a polypropylene glycol monomethacrylate.

In a particularly preferred second group of embodiments a urethane (meth)acrylate oligomer may be derived from
(i) a diisocyanate selected from isophorone diisocyanate and 2,4-toluene diisocyanate;
(ii) a polyol selected from ethoxylated and propoxylated derivatives of trimethylol propane and ethoxylated and propoxylated derivatives of pentaerythritol, wherein the number of units of ethylene oxide, propylene oxide or combinations thereof is in the range of 3 to 20; and
(iii) a polyethylene glycol monomethacrylate or a polypropylene glycol monomethacrylate, each of which contains from 5 to 10 repeating units of ethylene oxide or propylene oxide.

In a further group of embodiments a blend of the urethane (meth)acrylate oligomers of the first and second group of embodiments can be employed.

Example blends of urethane (meth)acrylate oligomers for use as component (B) may include the respective oligomers in a ratio of 10:1 to 1:10, especially 5:1 to 1:5, more preferably 3:1 to 1:3.

Preferred blends of urethane (meth)acrylate oligomers for use of component (B) may comprise a) at least one first oligomer derived from a polyester polyol chain-extending reagent and b) at least one second oligomer derived from a polyether polyol chain-extending reagent, in a ratio (a):(b) of 10:1 to 1:10, especially 5:1 to 1:5, more preferably 3:1 to 1:3.

Preferably, such urethane (meth)acrylate oligomers (a) correspond to the first group of embodiments as described above and urethane (meth)acrylate oligomers (b) correspond to the second group of embodiments described above.

In some embodiments it is preferred that urethane oligomers (a) provide at least 50wt% of the oligomer blend.

In this respect, a blend of urethane (meth)acrylate oligomers (a) and (b) may preferably be employed in a multi-part adhesive system comprising a plurality of parts, which in combination contains the adhesive composition as defined in the first aspect together with
(I) a component capable of initiating free radical polymerisation of the adhesive composition; and
(P) a component capable of promoting the polymerisation,
wherein (I) and (P), and optionally the adhesive composition as defined in the first aspect, are contained in different respective parts of the multi-part system.

Also, a blend of urethane (meth)acrylate oligomers (a) and (b) may preferably be employed in a two-part adhesive system comprising first and second parts, which in combination contains the adhesive composition as defined in the first aspect together with
(I) a component capable of initiating free radical polymerisation of the adhesive composition; and
(P) a component capable of promoting the polymerisation,
wherein (I) and (P) are contained in different respective parts of the two-part system.

In a preferred embodiment of the invention, the urethane (meth)acrylate oligomer (B) is a reaction product of sorbitol, ε-caprolactone, IPDI and HEA.

In another preferred embodiment of the invention, the urethane (meth)acrylate oligomer (B) is reaction product of a polyethoxylated pentaerythritol, IPDI and the tetrapropoxylate of hydroxypropyl methacrylate. In a further embodiment of the invention, the urethane (meth)acrylate component (B) is a mixture of the first and second types of urethane (meth)acrylate.

Preferably the (i) isocyanate, (ii) chain-extending reagent and (iii) hydroxy (meth)acrylate undergo reaction until the isocyanate (NCO) content of the urethane (meth)acrylate oligomer is 1% or less, preferably 0.8% or less, more preferably 0.6% or less.

A urethane (meth)acrylate oligomer which is the reaction product of (i), (ii) and (iii) above typically takes the form of a solution of oligomer in monomer(s) otherwise known as a resin. Some of the monomer content of the resin may be provided by an excess of reagents (ii) and/or (iii).

Generally, in both cases the reaction between the isocyanate and the chain-extending reagent, and the reaction between the isocyanate and end-capping hydroxyl(meth)acrylate require a catalyst. A preferred catalyst is a metal salt, especially a metal carboxylate. Tin catalysts are preferred. Particularly preferred catalysts are tin carboxylates, especially organotincarboxylates. A preferred example is dibutyltin dilaurate.

Reaction between isocyanate component (i) and chain-extending reagent (ii), and the isocyanate component (i) and hydroxyl(meth)acrylate (iii) will generally be performed at temperatures in the range of 40 to 130°C, and especially, in many cases, at a temperature in the range of 50 to 110°C.

The composition and characteristics of the resin may be further modified by the addition of diluent monomer(s). This may be done for the purpose of adjusting the viscosity/solids content of the resin, for example, or for influencing the subsequent curing characteristics of the resin.

Suitably, a diluent monomer has one ethylenically unsaturated bond.

Example diluent monomers include vinyl aromatics, such as styrene, methylstyrene, ethylstyrene, halogenated styrene and vinyl toluene. Additional diluent monomers include (meth)acrylate ester monomers, such as those exemplified for component (A) above.

Such monomers can be added prior to or during formation of the urethane (meth)acrylate oligomer. Additionally or alternatively diluent monomer may be added to the urethane (meth)acrylate reaction product. Diluent monomer content in such a resin may be up to 55wt% of the resin, for example.

The isocyanate (i) may firstly undergo reaction with end-capping hydroxy (meth)acrylate (iii), followed by reaction with a chain-extending reagent (ii). Alternatively, reaction between isocyanate (i) and chain-extending reagent (ii) may take place before reaction with hydroxy (meth)acrylate (iii).

### Organoclay

As disclosed herein the phrase "organoclay" refers to an organically surface treated clay. An organically surface treated clay may also be known as an organically modified clay or an organically modified phyllosilicate or an organophilic phyllosilicate.

Typically, an organoclay is an organophilic cation-modified clay derived from a clay mineral, generally of the smectite group, for example, bentonite, montmorillonite, hectorite, saponite or the like, by replacing the inorganic exchangeable cations, generally alkali or alkaline earth metal cations, which occur in the clay mineral, by organic cations (typically quaternary alkylammonium ions) each comprising at least one hydrocarbon radical which has sufficient carbon atoms to render the surface of the cation-exchanged clay hydrophobic.

Organoclays are used as rheology modifiers in resin systems. Suitable organoclays are available from BYK, Elementis, and CLiQ SwissTech.

The organoclay may comprise one type of clay particle. For instance, the organoclay may comprise a clay mineral having particles in the form of platelet structures or a clay mineral having particles in the form of needle-like structures or a clay mineral having particles in the form of ribbon-shaped structures or a clay mineral having particles in the form of pipe-shaped structures.

The organoclay may be a mixed mineral organoclay in which the organoclay comprises a first type of clay mineral and a second type of clay mineral, wherein the first and second types of clay mineral have different shaped particles. For instance, the mixed mineral organoclay may be a mixture of clay particles having platelet structures, ribbon-shaped structures, pipe-shaped structures and/or needle-like structures. In particular, the mixed mineral organoclay may be a mixture of a first clay mineral having platelet shaped particles and a second clay mineral having needle-like particles.

Preferably, the organoclay is selected from an organically modified smectite clay, an organically modified bentonite clay or a mixed mineral organoclay.

Preferably, the organoclay is a mixed mineral organoclay.

Preferably, the mixed mineral organoclay comprises benzalkonium sepiolite and benzalkonium montmorillonite.

Preferably, the organoclay is an organically modified bentonite clay and the organically modified bentonite clay comprises stearalkonium bentonite.

The organoclay as component (C) is present, based on the total weight of the adhesive composition, in an amount from 0.5 to 6.0 wt. %.

Surprisingly, it has been found that incorporating an organoclay in a specific amount in an adhesive composition provides an enhanced surface performance of the cured adhesive. In particular, a reduced tackiness of the cured adhesive is provided as shown by an elevated Shore D hardness of the top surface (i.e. the surface open to air during cure), and also a smaller difference between the Shore D hardness of the bottom surface (i.e. the surface not open to air during cure) and the Shore D hardness of the top surface. Enhanced abradability is also provided.

Preferably, the organoclay as component (C) is present, based on the total weight of the adhesive composition, in an amount from 0.5 to 5.5 wt %, such as from 0.5 to 5 wt %, such as from 0.5 to 4.5 wt %, such as from 0.5 to 4.0 wt %, such as from 0.5 to 3.5 wt %, such as from 0.5 to 3.0 wt %. More preferably, the organoclay as component (C) is present, based on the total weight of the adhesive composition, in an amount from 1.0 wt % to 5.5 wt %, such as from 1.0 to 5.0 wt %, such as from 1.0 to 4.5 wt %, such as from 1.0 to 4.0 wt %, such as from 1.0 to 3.5 wt %, such as from 1.0 to 3.0 wt %.

The organoclay as component (C) may be present in an amount, based on the total weight of the adhesive composition, of at least 0.5 wt %, such as at least 1.0 wt %.

The organoclay as component (C) may be present in an amount, based on the total weight of the adhesive composition, of at most 6.0 wt %, such as at most 5.5 wt %, such as at most 5.0 wt %, such as at most 4.5 wt %, such as at most 4.0 wt %, such as at most 3.5 wt %, such as at most 3.0 wt %

### Trivalent organophosphorus compound

A trivalent organophosphorus compound for component (D) may be any trivalent organophosphorus compound known to the art.

Preferably, the trivalent organophosphorus compound is a phosphine or a phosphite.

A trivalent organophosphorus compound that is a phosphine may have the structure P(R)₃, wherein P represents a phosphorus atom, and each R may independently be selected from a hydrogen atom, an aliphatic group, or an aromatic group.

A trivalent organophosphorus compound that is a phosphite may have the structure P(OR)₃, wherein P represents a phosphorus atom, and each R may independently be selected from a hydrogen atom, an aliphatic group, or an aromatic group.

Preferably, the trivalent organophosphorus compound is a phosphine of the formula:

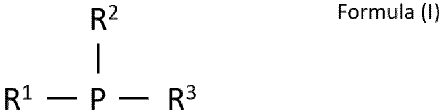

Wherein P represents a phosphorus atom, and wherein R¹, R² and R³ are independently selected from an alkyl group, an alkyl ether group, a cycloalkyl group or an aryl group.

Preferably, the trivalent organophosphorus compound is a phosphite of the formula:

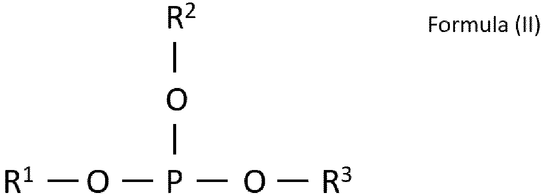

Wherein P represents a phosphorus atom, and wherein R¹, R² and R³ are independently selected from an alkyl group, an alkyl ether group, a cycloalkyl group or an aryl group.

Preferably, the trivalent organophosphorus compound is a phosphine or a phosphite selected from triphenyl phosphine, trioctyl phosphine, triphenyl phosphite, tetraphenyl dipropyleneglycol diphosphite, poly(dipropyleneglycol) phenyl phosphite, C₁₂-C₁₅ alkyl bisphenol A phosphite, tris(tridecyl) phosphite, and 3,9-bis(octadecyloxy)-2,4,8,10-tetraoxa-3,9-diphosphaspiro[5.5]undecane.

More preferably, the trivalent organophosphorus compound is a phosphine or a phosphite selected from triphenyl phosphine and triphenyl phosphite.

Preferably, the trivalent organophosphorus compound as component (D) is present in an amount, based on the total weight of the adhesive composition, of from 0.05 wt % to 2 wt %, such as from 0.05 wt % to 1.5 wt %, such as from 0.05 wt % to 1.0 wt %. More preferably, the trivalent organophosphorus compound as component (D) is present in an amount, based on the total weight of the adhesive composition, of from 0.05 wt % to 0.75 wt %. Even more preferably, the trivalent organophosphorus compound as component (D) is present in an amount, based on the total weight of the adhesive composition, of from 0.05 wt % to 0.50 wt %

The trivalent organophosphorus compound as component (D) may be present in an amount, based on the total weight of the adhesive composition, of at least 0.05 wt %, such as at least 0.1 wt %.

The trivalent organophosphorus compound as component (D) may be present in an amount, based on the total weight of the adhesive composition, of at most 2 wt %, such as at most 1.5 wt %, such as at most 1.0 wt %, such as at most 0.75 wt %, such as at most 0.5 wt %, such as at most 0.2 wt %.

### Anti-tack agent

An anti-tack agent for component (E) may be any anti-tack agent for forming a film on the surface of the adhesive composition provided that the anti-tack agent is a wax.

In particular, the anti-tack agent may form an uninterrupted film on the surface of the adhesive composition.

Without wishing to be bound by theory, the migration of the anti-tack agent to the surface of the adhesive composition provides a film on the surface of the adhesive composition (preferably, an uninterrupted film) thereby providing a barrier to atmospheric oxygen and thus contributing to a reduction in oxygen inhibition.

Preferably, the anti-tack agent is a paraffin wax.

Preferably, the anti-tack agent is a paraffin wax having a melting point of ≤ 65°C, such as ≤ 55°C, such as ≤ 45°C.

Examples of the anti-tack agent are BYK-S^{®} 782 and BYK-S^{®} 780 by the company BYK.

Preferably, the anti-tack agent as component (E) is present, based on the total weight of the adhesive composition, in an amount from 0.5 to 4.0 wt %, such as 1 to 4.0 wt %. More preferably, the anti-tack agent as component (E) is present, based on the total weight of the adhesive composition, in an amount from 1.0 to 3.0 wt %. Even more preferably, the anti-tack agent as component (E) is present, based on the total weight of the adhesive composition, in an amount from 1.0 to 2.5 wt %.

The anti-tack agent as component (E) may be present in an amount, based on the total weight of the adhesive composition, of at least 0.05 wt %, such as at least 0.1 wt %, such as at least 0.5 wt %, such as at least 0.75 wt %, such as at least 1.0 wt %.

The anti-tack agent as component (E) may be present in an amount, based on the total weight of the adhesive composition, of at most 4.0 wt %, such as at most 3.0 wt %, such as at most 2.0 wt %, such as at most 1.5 wt %, such as at most 1.0 wt %.

### Further components of the adhesive system

The adhesive composition may contain a chlorinated elastomeric polymer. This may be any chlorine-bearing polymer, such as a thermoplastic polymer, elastomer or synthetic rubber that is at least partially soluble or dispersible in the (meth)acrylate monomer. Examples are polychloroprene (sometimes referred to as chlorinated polybutadiene), chlorinated polyethylene, chlorosulphonated polyethylene, other chlorinated hydrocarbon polymers, chlorinated rubber, and epichlorohydrin polymers, including copolymers of all of the above.

Preferred chlorinated elastomers are chlorinated polyethylenes (such as the Tyrin^{®} range of DuPont Dow Elastomers S.A.) and polychloroprenes (such as the Neoprene^{™} products of DuPont Performance Elastomers LLC). The polychloroprenes are especially preferred. The "A" and "W" ranges of Neoprene products are particularly useful.

In this regard, various Neoprene products are available. Whilst the basic chemical composition of Neoprene synthetic rubber is polychloroprene, the polymer structure can be modified, for example by copolymerisation of chloroprene with sulphur and/or 2,3-dichloro 1,3-butadiene to yield a family of materials with a range of chemical and physical properties.

Preferably, the chlorinated elastomeric polymer is present, based on the total weight of the adhesive composition, in an amount from 5 to 20 wt. %, such as from 5 to 15 wt. %, such as from 10 to 15 wt. %,

The chlorinated elastomeric polymer may be present in an amount, based on the total weight of the adhesive composition, of at least 5 wt. %, such as at least 10 wt. %.

The chlorinated elastomeric polymer may be present in an amount, based on the total weight of the adhesive composition, of at most 25 wt. %, such as at most 20 wt. %

The adhesive composition may contain a core-shell impact modifier. The use of a core-shell impact modifier may assist in further improving mechanical properties. The core-shell impact modifier may be any one of those familiar to those skilled in the art. These materials are particulate graft copolymers having a rubbery or elastomeric core and a hard shell. They swell in the (meth)acrylate monomer but do not dissolve therein. Typically, so-called "hard" monomers (such as styrene, acrylonitrile or methyl methacrylate) are grafted onto a rubbery core made from polymers of so-called "soft" monomers (such as butadiene or ethyl acrylate). The core-shell polymers are often referred to by abbreviations of the monomers they contain, useful types being the MABS (methacrylate-acrylonitrile-butadiene-styrene), ABS (acrylonitrile-butadiene-styrene) and MBS (methacrylate-butadiene-styrene) types.

Preferably, the core-shell impact modifier comprises a shell derived from a methacrylate polymer or copolymer. The MBS type of core-shell impact modifier is preferred. Examples of the MBS type of core-shell impact modifier include the Paraloid^{®} BTA range of Dow. A combination of two or more impact modifiers may be employed.

Preferably, the core-shell impact modifier is present, based on the total weight of the adhesive composition, in an amount from 5 to 20 wt. %, such as from 5 to 15 wt. %, such as from 10 to 15 wt. %,

The core-shell impact modifier may be present in an amount, based on the total weight of the adhesive composition, of at least 5 wt. %, such as at least 10 wt. %.

The core-shell impact modifier may be present in an amount, based on the total weight of the adhesive composition, of at most 25 wt. %, such as at most 20 wt. %

Optionally, the adhesive composition of the invention may contain one or more acid-functional ethylenically unsaturated monomers to assist bonding to metal surfaces, as is known in the art. Examples of such acid-functional monomers include ethylenically unsaturated C₃ to C₆ monobasic or dibasic carboxylic acids, such as acrylic acid, methacrylic acid, maleic acid, fumaric acid, itaconic acid and crotonic acid. Further examples include ethylenically unsaturated acids having an aromatic group substituent, such as cinnamic acid.

Methacrylic acid and maleic acid are preferred, with methacrylic acid being especially preferred.

Such acid-functional ethylenically unsaturated monomers may be present in an amount of 0.1 to 5.0 wt. %, such as 0.2 to 5.0 wt. %, such as 0.25 to 3.0 wt. % based on the total weight of the adhesive composition.

Bonding to metal surfaces may be further assisted by the inclusion of one or more unsaturated phosphate-containing monomers, as is also known in the art. Examples are ethylene glycol methacrylate phosphate (sometimes termed phosphoethyl methacrylate) and various proprietary unsaturated phosphates such as Sipomer^{®} PAM-100 and PAM-200 (offered by Solvay), or Light Ester P-1M and P-2M (offered by Kyoeisha Chemical Co., Japan).

Such phosphate-containing monomers may be present in an amount of 0.1 to 5.0 wt. %, such as 0.2 to 5.0 wt. %, such as 0.25 to 2.5 wt. %, based on the total weight of the adhesive composition.

The adhesive may also contain inhibitors and stabilisers, which help to prolong the shelf life of the product in storage and to control the working time of the adhesive in use. Such inhibitors are well known to those skilled in the art and may comprise quinones, hydroquinones, substituted phenols and the like. In addition to inhibitors that may be added directly to the adhesive composition during its preparation, some of the raw materials employed, especially the (meth)acrylate ester monomer(s), may also contain inhibitors introduced by the manufacturer/supplier. Hence, on account of the variety of materials that may be chosen, some with in situ inhibitors, and the variety of initiators, promoters and inhibitors that may be used to prepare a composition, the selection of the complete inhibitor package is generally the final step in the formulating process.

The adhesive may also contain a small amount of chelating agent such as the tetrasodium salt of ethylene diamine tetraacetic acid. Chelating agents are used as scavengers for trace metal impurities that can destabilise the reactive (meth)acrylate formulations, so they may be included to impart further stabilisation to the adhesive compositions.

Chelating agent may be present in an amount of 0.01 to 0.5 wt.%, such as 0.01 to 0.25 wt. %, based on the total weight of the adhesive composition.

The adhesive may also contain small amounts of viscosity control agents such as fumed silica, or larger amounts of fillers and/or extenders such as talc, clay, calcium carbonate or alumina hydrate, to reduce the cost of the adhesive.

The adhesives of the invention are typically cured by means of a peroxide or hydroperoxide initiator in combination with an amine promoter, although in some cases additional components are also used to facilitate cure. Typical peroxides are benzoyl peroxide, cumene hydroperoxide, tert-butyl hydroperoxide, dicumyl peroxide, tert-butyl peroxyacetate and tert-butyl perbenzoate. The most common amine promoters are well known to those skilled in the art and include tertiary aromatic amines and aldehyde-amine reaction products. Useful tertiary amines include N,N-dimethylaniline, N,N-diethylaniline, N,N-dimethyl-p-toluidine, N,N-diethyltoluidine and N,N-bis(2-hydroxyethyl)-p-toluidine.

Preferred combinations of initiator and promoter for the curing system are those suitable for curing at ambient temperatures.

### Adhesive Systems

The adhesives of the invention may be provided, as is usual with (meth)acrylate-based adhesives, as two-pack systems consisting of two separate parts that are mixed just prior to use to initiate cure. The first part (or 'A-side') lacks at least one of the components of the cure system, which is instead included in the second part (or 'B-side'). A-side and B-side are therefore stable on prolonged storage, as neither side contains all of the components necessary for polymerisation (cure) to occur. Just before use, the A-side and B-side are mixed together in whatever ratio is appropriate for the cure system being employed.

In one preferred embodiment of the invention, the B-side consists only of the peroxide initiator (usually benzoyl peroxide) in some sort of liquid carrier medium (usually an ester-based plasticiser), while the A-side contains all the other components of the adhesive, the A-side being mixed with the B-side in any ratio from about 100:1 (A-side:B-side) to about 5:1, preferably from 50:1 to 10:1. In this embodiment, the amine promoter, contained in the A-side, is typically an aromatic tertiary amine, with N,N-dimethyl-p-toluidine and N,N-bis(2-hydroxyethyl)-p-toluidine being preferred. Such a cure system is sometimes referred to by those skilled in the art as a "10:1 cure system" on account of the preferred mix ratio of A-side to B-side used with this particular cure system.

Blends of urethane (meth)acrylate oligomers are particularly suitable for use in a 10:1 cure system.

Whilst the invention is not particularly limited by the packaging holding the A and B sides of the adhesive composition, nor by the means by which the A and B sides are mixed prior to use, it is preferred that the A and B sides are packed in separate barrels of a two-barrel cartridge. The two barrels may be adjacent to one another or concentric, one mounted inside the other. In use, the cartridge is mounted in a "gun" equipped with one or more plungers, which drive the adhesive forwards from the rear of the barrels, both A and B sides thus being extruded together through a mixing nozzle mounted on the front of the assembly. The mixed adhesive can then be applied directly from the nozzle onto the substrates to be bonded.

The adhesives of the invention, for example the two pack 10:1 systems noted above, can be used to provide a particularly strong and mechanically robust bond to and between materials such as composites, thermoplastics and metals (preferably aluminium). As such, they can be regarded as so-called structural adhesives.

### Surface, mechanical and adhesive properties

Typically, when cured, the adhesive compositions according to the first aspect have a Shore D hardness (top surface) of more than 50, such as more than 55, such as more than 60 when measured in accordance with the method provided in the materials and methods section.

Typically, when cured, the adhesive compositions according to the first aspect are abradable; and have a Shore D hardness (top surface) of more than 50, such as more than 55, such as more than 60 when measured in accordance with the method provided in the materials and methods section.

Typically, when cured, the adhesive compositions according to the first aspect have an abradability rating of at least 3 when measured according to the method provided in the materials and methods section; and a Shore D hardness (top surface) of more than 50, such as more than 55, such as more than 60 when measured in accordance with the method provided in the materials and methods section.

Typically, when cured, the adhesive compositions according to the first aspect have:
- a Shore D hardness (top surface) of more than 50, such as more than 55, such as more than 60 when measured in accordance with the method provided in the materials and methods section;
- a Shore D Δ (Shore D bottom surface hardness minus Shore D top surface hardness) of at most 16, such as at most 14, such as at most 12, wherein the Shore D measurements are measured in accordance with the method provided in the materials and methods section
- a break strain of least 55 %, such as at least 60 wt %, such as at least 65 wt %when measured in accordance with the method provided in the materials and methods section; and
- a Al LSS of at least 12 MPa, such as at least 14 MPa, such as at least 16 MPa when measured in accordance with the method provided in the materials and methods section;
   and optionally
- an abradablility rating of at least 3 when measured in accordance with the method provided in the materials and methods section.

Typically, when cured, the adhesive compositions according to the first aspect have a Shore D Δ (Shore D bottom surface hardness minus Shore D top surface hardness) of at most 16, such as at most 14, such as at most 12, wherein the Shore D measurements are measured in accordance with the method provided in the materials and methods section.

Typically, when cured, the adhesive compositions according to the first aspect have a Shore D hardness (top surface) of more than 50, such as more than 55, such as more than 60; and have a Shore D Δ (Shore D bottom surface hardness minus Shore D top surface hardness) of at most 16, such as at most 14, such as at most 12, wherein the Shore D measurements are measured in accordance with the method provided in the materials and methods section.

Typically, when cured, the adhesive compositions according to the first aspect are abradable; and have a Shore D hardness (top surface) of more than 50, such as more than 55, such as more than 60; and have a Shore D delta (Δ) (Shore D bottom surface hardness minus Shore D top surface hardness) of at most 16, such as at most 14, such as at most 12, wherein the Shore D measurements are measured in accordance with the method provided in the materials and methods section.

Typically, when cured, the adhesive compositions according to the first aspect have an abradability rating of at least 3 when measured according to the method provided in the materials and methods section; and have a Shore D hardness (top surface) of more than 50, such as more than 55, such as more than 60; and have a Shore D Δ (Shore D bottom surface hardness minus Shore D top surface hardness) of at most 16, such as at most 14, such as at most 12, wherein the Shore D measurements are measured in accordance with the method provided in the materials and methods section.

### Further embodiments

Preferably, adhesive compositions according to the first aspect may comprise:
(A) from 55 to 65 wt. %, based on the total weight of the adhesive composition, of a (meth)acrylate ester monomer, such as from 58 to 65 wt. %;
(B) from 1.0 to 7.0 wt. %, based on the total weight of the adhesive composition, of a urethane (meth)acrylate oligomer, such as from 1.0 to 6.5 wt. %, such as from 1.0 to 6.0 wt. %;
(C) from 0.5 to 6.0 wt. %, based on the total weight of the adhesive composition, of an organoclay, such as from 0.5 to 5.0 wt. %, such as from 0.5 to 3.5 wt. %;
(D) from 0.05 wt. % to 1.0 wt. %, based on the total weight of the adhesive composition, of a trivalent organophosphorus compound, such as from 0.05 wt. % to 0.50 wt. %; and
(E) from 1.0 to 4.0 wt %, based on the total weight of the adhesive composition, of an anti-tack agent for forming a film on the surface of the adhesive composition, such as from 1.0 to 3.0 wt. %, wherein the anti-tack agent is a wax.

Preferably, adhesive compositions according to the first aspect may comprise:
(A) from 55 to 65 wt. %, based on the total weight of the adhesive composition, of a (meth)acrylate ester monomer, such as from 58 to 65 wt. %;
(B) from 1.0 to 7.0 wt. %, based on the total weight of the adhesive composition, of a urethane (meth)acrylate oligomer, such as from 1.0 to 6.5 wt. %, such as from 1.0 to 6.0 wt. %;
(C) from 0.5 to 6.0 wt. %, based on the total weight of the adhesive composition, of an organoclay, such as from 0.5 to 5.0 wt. %, such as from 0.5 to 3.5 wt. %;
(D) from 0.05 wt. % to 1.0 wt. %, based on the total weight of the adhesive composition, of a trivalent organophosphorus compound, such as from 0.05 wt. % to 0.50 wt. %; and
(E) from 1.0 to 4.0 wt %, based on the total weight of the adhesive composition, of an anti-tack agent for forming a film on the surface of the adhesive composition, such as from 1.0 to 3.0 wt. %, wherein the anti-tack agent is a wax;
(F) from 5 to 20 wt %, based on the total weight of the adhesive composition, of a chlorinated elastomeric polymer; and
(G) from 5 to 20 wt %, based on the total weight of the adhesive composition, of a core-shell impact modifier.

Preferably, adhesive compositions according to the first aspect may comprise:
(A) from 55 to 65 wt. %, based on the total weight of the adhesive composition, of a (meth)acrylate ester monomer, such as from 58 to 65 wt. %;
(B) from 1.0 to 7.0 wt. %, based on the total weight of the adhesive composition, of a urethane (meth)acrylate oligomer, such as from 1.0 to 6.5 wt. %, such as from 1.0 to 6.0 wt. %;
(C) from 0.5 to 6.0 wt. %, based on the total weight of the adhesive composition, of an organoclay, such as from 0.5 to 5.0 wt. %, such as from 0.5 to 3.5 wt. %;
(D) from 0.05 wt. % to 1.0 wt. %, based on the total weight of the adhesive composition, of a trivalent organophosphorus compound, such as from 0.05 wt. % to 0.50 wt. %; and
(E) from 1.0 to 4.0 wt %, based on the total weight of the adhesive composition, of an anti-tack agent for forming a film on the surface of the adhesive composition, such as from 1.0 to 3.0 wt. %, wherein the anti-tack agent is a wax;
(F) from 5 to 20 wt %, based on the total weight of the adhesive composition, of a chlorinated elastomeric polymer;
(G) from 5 to 20 wt %, based on the total weight of the adhesive composition, of a core-shell impact modifier; and
(H) optionally, from 2 to 15 wt. %, based on the total weight of the adhesive composition, of one or more further additives selected from an acid-functional ethylenically unsaturated monomer, a chelating agent, an inhibitor, a promoter, an unsaturated phosphate-containing monomer, a viscosity control agent and/or an antioxidant.

Preferably, a method of making an adhesive composition according to the first aspect comprises the following steps:
(i) a (meth)acrylate ester monomer (A) and an organoclay (C) are mixed together;
(ii) to the mixture provided in step (i) a urethane (meth)acrylate oligomer (B) is added, optionally with further additives such as a chelating agent, a promoter and/or an unsaturated phosphate-containing monomer;
(iii) a trivalent organophosphorus compound (D) and an anti-tack agent (E) are combined together and added to the mixture provided in step (ii);
(iv) optionally, to the mixture provided in step (iii) a core shell impact modifier is added; and
(v) optionally, between step (i) and step (ii), further additives such as an acid-functional ethylenically unsaturated monomer, a chlorinated elastomeric polymer, an inhibitor and/or an antioxidant are added to the mixture provided in step (i)

The features disclosed in the foregoing description, or in the following claims, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

### Examples

### Materials and Methods

Organoclay 1 is a mixed mineral organoclay comprising benzalkonium sepiolite and benzalkonium montmorillonite available from BYK.

Organoclay 2 is an organically modified smectite clay available from Elementis.

Organoclay 3 is a mixed mineral organoclay available from CLiQ SwissTech.

Organoclay 4 is an organically modified bentonite clay comprising stearalkonium bentonite available from BYK.

The EDTA solution is a solution of 7% of ethylenediamine tetraacetic acid tetrasodium salt (available from Sigma Aldrich) in a 50:50 mixture of distilled water and diethylene glycol.

The urethane acrylate oligomer is the reaction product of isocyanate, a polyol and a hydroxyacrylate.

The IGI wax used in Reference Example 1 is 1250A Wax and was obtained from Alfa Chemicals.

BYK^{®} S-782 is a wax available from BYK.

BYK^{®} S-780 is a wax available from BYK.

Inhibitor 1 is a quinone compound.

Inhibitor 2 is a solution of a hydroquinone compound in methyl proxitol.

The antioxidant is a compound having a hindered phenol structure and an aliphatic amine group.

The adhesive compositions described in Table 1 were cured with a 10:1 two-part system, in which 0.1222g of benzoyl peroxide was used as the initiator and mixed with 9 g of the adhesive composition, for testing of the surface properties, tensile properties and adhesive properties.

### Shore D hardness

Shore D hardness was conducted according to ISO 868. The Shore D hardness was measured as follows. The initiator was mixed into the adhesive using a speed mixer SpeedMixer^{®} DAC 600.1 FVZ supplied by Synergy Devices Limited at 2000 RPM. The initiated adhesive is then cast into a circular metal mould coated with a release agent and having dimensions of 7 mm deep x 90 mm diameter. The specimen is left to cure open to the air in a temperature-controlled incubator at 24-25°C for 24 hours. After the specimen has cured, the specimen is removed from the metal mould, placed on a flat, rigid surface and the Shore D hardness is measured using a SATRA STD 226 Digital Durometer, supplied by SATRA Technology Centre on both the top surface (the surface open to the air during cure) and the bottom surface (the surface in contact with the metal mould during cure).

### Abradability

The abradability can be determined as follows. A sample is prepared in the same way as for the Shore D hardness measurement, i.e. in accordance with ISO 868. To measure the abradability a piece of 80 Grit sandpaper (50 mm x 100 mm) is used to abrade the top surface ten times. The ease of sanding the specimen is then provided with a rating of 1 to 5, wherein a lower value represents better abradability, with a value of 1 indicating excellent abradability. A rating of 1 indicates that the specimen requires very little effort to sand. Further indicators are that if the sanding debris is dry, firm debris then a good surface cure is provided. Whereas, if the debris is tacky or soft then this is an indication of a less good surface cure.

### Tensile testing

Tensile testing was conducted according to ASTM D638, Type IV. To prepare specimens for the tensile tests, the initiated adhesive was poured into a 3mm gap between two sheets of Melinex sheet (Melinex is a well-known brand of 10 polyethylene terephthalate thin sheet) supported by glass plates approx. 30cm square. The 3mm gap is maintained by means of 3mm thick PTFE spacers. The resulting cast sheets were left to cure overnight at ambient temperature before the test specimens were cut from them using a Boxford A3HSRmi2 3D high-speed router supplied by Boxford Holdings Ltd. The specimens are dumbbell shaped, the dimensions being as per the type IV of ASTM D638. The specimens were then postcured for 3 hours at 80°C in an oven before being tested according to the same ASTM D638. The test equipment was an Instron static tensile testing machine with a 50kN load cell and a noncontact extensometer. A 5mm/minute displacement rate was used for the tensile tests. 5 specimens of each were tested and the results averaged

### Aluminium Lap Shear Strength

Aluminium Lap Shear Strength (Al LSS) was tested according to ASTM 1002 (wherein the test pieces are arranged to provide a 12.5 mm overlap and a bond line thickness of 0.26 mm). Lap shear adhesion tests on aluminium used test pieces of 6061-T6 grade aluminium 25mm wide and 1.62mm thick. These were acetone-wiped before bonding. A small blob of initiated adhesive was applied to one end of both of the test pieces to be bonded and the two then laid, adhesive ends together, in a metal mould which positions the two in such a way as to give the correct overlap between them (12.5mm) and bond line thickness (0.26mm). Thus set up, the specimens were left to cure overnight at ambient temperature before being post-cured for 16 hours at 40°C prior to testing. The adhesive joints were pulled apart, using the same Instron machine, according to ASTM 1002. 5 specimens of each were tested and the results averaged.

### Examples

Table 1 lists the compositional make-up of each of the adhesive compositions evaluated herein. The weight percents provided in Table 1 are based on the total weight of the adhesive composition.

The adhesive compositions described in Table 1 below were prepared according to the following general protocol: The mixer used to prepare all the adhesive examples was a Ross VMC2 high shear mixer made by Charles Ross & Son Company of Hauppauge, N.Y. This has a stainless-steel mixing vessel of 5 litres capacity, filled with a 2 1/2-inch circular high shear dispersing blade and rotating side sweepers to prevent material from clinging to the sides of the mixing vessel instead of being mixed into the bulk of the product by the dispersing blade. When in use, the vessel is fitted with a sealed lid to prevent monomer loss during mixing.

Firstly, a portion of the methyl methacrylate was weighed into a container along with the organoclay. The contents of this container were stirred to achieve a homogenous mixture and then transferred to the mixing vessel of the Ross VMC2. Methacrylic acid, polychloroprene, IGI Wax (where applicable), the inhibitors and the antioxidant were added to the vessel which was then lidded and mixed at 20 Hz disperser speed (11Hz sweeper speed) until the polychloroprene had fully dissolved. The EDTA solution, the urethane acrylate oligomer, the N,N, dihydroxyethyl-p-toluidin, and the methacrylated phosphate ester were added to the vessel and mixed for 10 minutes at the same speeds. The trivalent organophosphorus compound (triphenyl phosphite or triphenyl phosphine) and the anti-tack agent (BYK-S 782 or BYK-S 780) were heated in separate containers, until they melted into a homogenous liquid then added to the vessel and mixed for 10 minutes at the same speeds. The fumed silica and the MBS core shell impact modifier were charged slowly, and the disperser speed was increased to 40 Hz for 2 hours. After the 2 hours, the temperature of the batch was reduced to 24°C with only the sweeper blades still operating. Once cooled, the batch was decanted from the mixer vessel.

**Table 1**

| **EXAMPLE** | **1** (reference) | **2** | **3** | **4** | **5** | **6** |
|---|---|---|---|---|---|---|
| **RAW MATERIAL** | | | | | | |
| Methyl methacrylate | 56.6 % | 60.4 % | 60.4 % | 60.4 % | 60.4 % | 60.4 % |
| Organoclay 1 | - | 1.7 % | - | - | - | 1.7% |
| Organoclay 2 | - | - | 1.7 % | - | - | - |
| Organoclay 3 | - | - | - | 1.7 % | - | - |
| Organoclay 4 | - | - | - | - | 1.7 % | - |
| Methacrylic acid | 2.6% | 2.6% | 2.6% | 2.6% | 2.6% | 2.6% |
| Polychloroprene | 14.3 % | 14.3 % | 14.3 % | 14.3 % | 14.3 % | 14.3 % |
| EDTA solution | 0.3 % | 0.3% | 0.3 % | 0.3 % | 0.3% | 0.3% |
| Urethane Acrylate Oligomer | 10.9% | 3.8% | 3.8% | 3.8% | 3.8% | 3.8% |
| N,N, Dihydroxyethyl-p-Toluidin | 0.3 % | 0.3% | 0.3 % | 0.3 % | 0.3% | 0.3% |
| IGI Wax | 0.5 % | - | - | - | - | - |
| BYK-S 782 | - | 2% | 2% | 2% | 2% | 2% |
| BYK-S 780 | - | - | - | - | - | - |
| Triphenyl phosphite | - | 0.1 % | 0.1 % | 0.1 % | 0.1 % | - |
| Triphenyl phosphine | - | - | - | - | - | 0.1 % |
| MBS core shell impact modifier | 13.7 % | 13.7 % | 13.7 % | 13.7 % | 13.7 % | 13.7 % |
| Methacrylated phosphate ester | 0.3 % | 0.3% | 0.3 % | 0.3 % | 0.3% | 0.3 % |
| Fumed silica | 0.5 % | 0.5 % | 0.5 % | 0.5 % | 0.5 % | 0.5 % |
| Other additives: Inhibitor 1; Inhibitor 2 solution; and antioxidant | 0.044 % | 0.044 % | 0.044% | 0.044 % | 0.044 % | 0.044 % |

**Table 1 continued**

| **EXAMPLE** | **7** | **8** | **9** (reference) | **10** (reference) | **11** | **12** | **13** (reference) |
|---|---|---|---|---|---|---|---|
| **RAW MATERIAL** | | | | | | | |
| Methyl methacrylate | 62.3 % | 58.4 % | 56.5 % | 54.6 % | 61.1 % | 59.1 % | 55.6 % |
| Organoclay 1 | 1.7 % | 1.7 % | 1.7 % | 1.7 % | 1.0 % | 3.0 % | 6.5 % |
| Organoclay 2 | - | - | - | - | - | - | - |
| Organoclay 3 | - | - | - | - | - | - | - |
| Organoclay 4 | - | - | - | - | - | - | - |
| Methacrylic acid | 2.6 % | 2.6 % | 2.6 % | 2.6 % | 2.6 % | 2.6 % | 2.6 % |
| Polychloroprene | 14.3 % | 14.3 % | 14.3 % | 14.3 % | 14.3 % | 14.3 % | 14.3 % |
| EDTA solution | 0.3 % | 0.3 % | 0.3 % | 0.3 % | 0.3 % | 0.3 % | 0.3 % |
| Urethane Acrylate Oligomer | 1.9 % | 5.8 % | 7.7 % | 9.6 % | 3.8 % | 3.8 % | 3.8 % |
| N,N, Dihydroxyethyl-p-Toluidin | 0.3 % | 0.3 % | 0.3 % | 0.3 % | 0.3% | 0.3% | 0.3 % |
| IGI wax | - | - | - | - | - | - | - |
| BYK-S 782 | 2 % | 2 % | 2 % | 2 % | 2 % | 2 % | 2 % |
| BYK-S 780 | - | - | - | - | - | - | - |
| Triphenyl phosphite | 0.1 % | 0.1 % | 0.1 % | 0.1 % | 0.1 % | 0.1% | 0.1 % |
| Triphenyl phosphine | - | - | - | - | - | - | - |
| MBS core shell impact modifier | 13.7 % | 13.7 % | 13.7 % | 13.7 % | 13.7 % | 13.7 % | 13.7 % |
| Methacrylated phosphate ester | 0.3 % | 0.3 % | 0.3 % | 0.3 % | 0.3 % | 0.3 % | 0.3 % |
| Hydrophilic Fumed silica | 0.5 % | 0.5 % | 0.5 % | 0.5 % | 0.5 % | 0.5 % | 0.5 % |
| Other additives: Inhibitor 1; Inhibitor 2 solution; and antioxidant | 0.044 % | 0.044 % | 0.044 % | 0.044 % | 0.044 % | 0.044 % | 0.044 % |

The adhesive compositions were initiated, and specimens were prepared and tested for abradability and Shore D hardness, as described in the Materials and Methods section above. The results are set out below:

**Table 2**

| **Adhesive Example** | **Abradability Rating** | **Shore D hardness (top surface - open to air)** | **Shore D hardness (bottom surface - not open to air)** | **Shore D Δ** (Shore D bottom surface - Shore D top surface) |
|---|---|---|---|---|
| **1** (reference) | 5 | 41 | 70 | 29 |
| **2** | 1 | 64 | 66 | 2 |
| **3** | 2 | 51 | 60 | 9 |
| **4** | 2 | 55 | 61 | 6 |
| **5** | 1 | 60 | 70 | 10 |
| **6** | 1 | 65 | 68 | 3 |
| **7** | 1 | 64 | 67 | 3 |
| **8** | 1 | 64 | 68 | 4 |
| **9** (reference) | 4 | 50 | 68 | 18 |
| **10** (reference) | 4 | 48 | 69 | 21 |
| **11** | 1 | 65 | 70 | 5 |
| **12** | 2 | 58 | 70 | 12 |
| **13** (reference) | 4 | 46 | 66 | 20 |

Reference example 1 is representative of the prior art formulations described in WO2011/104510A.

Table 2 shows that the adhesive compositions according to the first aspect of the invention (Examples 2-8 and 11-12) surprisingly show a significant improvement in surface performance as compared to the prior art formulation. In particular, Examples 2-8 and 11-12 demonstrate reduced surface tackiness as compared to Reference Example 1 as demonstrated by their elevated Shore D hardness (top surface, i.e. the surface exposed to air during cure). Indeed, Examples 2-8 and 11-12 respectively show a significantly smaller difference between the Shore D hardness (bottom surface) and Shore D hardness (top surface) in contrast to Example 1 which shows a large difference between Shore D (bottom surface) and Shore D (top surface). This shows that the surface exposed to air in Examples 2-8 and 11-12 is less affected by oxygen inhibition than that in Reference Example 1.

Also, Examples 2-8 and 11-12 show an improved abradability score as compared to Reference Example 1 - this also indicates that Examples 2-8 and 11-12 demonstrate reduced tackiness (and hence improved surface performance) as compared to Reference Example 1.

Examples 2 to 5 show that the improvement in surface performance is also achieved with a variety of different organoclays.

Example 6 shows that the improvement in surface performance is also achieved with an alternative trivalent organophosphorus compound (triphenyl phosphine).

Examples 7 and 8 show that that the improvement in surface performance is also achieved for urethane acrylate oligomer contents of 1.9 wt % and 5.8 wt % respectively (based on the total weight of the adhesive composition).

Examples 11 and 12 show that show that that the improvement in surface performance is also achieved for organoclay contents of 1.0 wt % and 3.0 wt % respectively (based on the total weight of the adhesive composition).

Reference Examples 9 and 10 show that at high levels of urethane acrylate oligomer (7.7 wt % and 9.6 wt % respectively, based on the total weight of the adhesive composition) that the surface performance is diminished. Indeed, Reference Examples 9 and 10 each present a large Shore D delta value showing that the surface exposed to air during cure for these examples is more affected by oxygen inhibition compared to Examples 2-8 and 11-12. The diminished surface performance of Examples 9 and 10 is also shown by their lower abradability score.

Reference Example 13 shows that at high levels of organoclay (6.5 wt % based on the total weight of the adhesive composition) that the surface performance is diminished. Indeed, Reference Example 13 shows a large Shore D delta value showing that the surface exposed to air during cure for this example is more affected by oxygen inhibition compared to Examples 2-8 and 11-12. The diminished surface performance of Reference Example 13 is also shown by its lower abradability score.

Further experiments have also shown that a modified version of Example 2, in which BYK-S 782 is replaced with BYK-S 780, also provides a cured adhesive having a good Shore D hardness and good abradability, such that the cured specimen has improved surface performance over that provided by the prior art formulation (Example 1).

The initiated adhesive compositions were also subjected to tensile testing, as described in the Materials and Methods section above. The results are set out below:

**Table 3**

| **Adhesive Example** | **Peak Stress (MPa)** | **Modulus Auto Youngs (MPa)** | **Modulus (2.5-5.0 MPa) (MPa)** | **Break Strain (%)** |
|---|---|---|---|---|
| **1** (reference) | 16.71 | 1219.71 | 879.78 | 54.25 |
| **2** | 18.63 | 974.68 | 887.89 | 75.07 |
| **3** | 18.15 | 1207.50 | 1067.51 | 63.52 |
| **4** | 19.14 | 889.74 | 851.73 | 64.95 |
| **5** | 19.11 | 1150.2 | 1104.59 | 64.14 |
| **6** | 17.53 | 957.10 | 870.07 | 67.92 |
| **7** | 18.94 | 1212.03 | 876.71 | 59.71 |
| **8** | 19.26 | 1460.35 | 1062.34 | 55.58 |
| **9** (reference) | 18.41 | 1369.05 | 908.44 | 84.45 |
| **10** (reference) | 18.72 | 1420.63 | 988.35 | 70.91 |
| **11** | 20.37 | 830.530 | 816.72 | 87.67 |
| **12** | 20.74 | 1428.74 | 1082.47 | 70.99 |
| **13** (reference) | 24.18 | 166.17 | 1600.33 | 46.9 |

Table 3 shows that the adhesive compositions according to the first aspect of the invention (Examples 2-8 and 11-12) show a satisfactory mechanical performance.

Indeed, the adhesive compositions according to the first aspect of the invention (Examples 2-8 and 11-12) surprisingly show an improvement in break strain as compared to the prior art formulation (Example 1) as demonstrated by their elevated break strain (%).

Further experiments have also shown that in comparison with Reference example 1, adhesive compositions employing comparatively low levels of urethane (meth)acrylate oligomer together with carefully selected levels of organoclay surprisingly provide a good balance in tensile properties. In particular, it has been discovered that careful control of the amount of urethane (meth)acrylate oligomer and the amount of organoclay can provide desirable levels of break strain.

The adhesive compositions were initiated and subjected to Aluminium Lap Shear Strength Testing, as described in the Materials and Methods section above. The results are set out below along with the failure mode of the adhesive joint:

**Table 4**

| **Adhesive Example** | **Aluminium Lap Shear Strength (AI LSS)** | **Failure Mode** |
|---|---|---|
| | **(MPa)** | |
| **1** (reference) | 17.07 | 100C |
| **2** | 14.95 | 100C |
| **3** | 16.17 | 100C |
| **4** | 16.35 | 100C |
| **5** | 17.02 | 100C |
| **6** | 14.57 | 100C |
| **7** | 16.98 | 100C |
| **8** | 16.99 | 100C |
| **9** (reference) | 17.67 | 100C |
| **10** (reference) | 17.79 | 100C |
| **11** | 16.65 | 100C |
| **12** | 16.02 | 100C |
| **13** (reference) | 13.53 | 100C |

Table 4 shows that the adhesive compositions according to the first aspect of the invention (Examples 2-8 and 11-12) all have an Al LSS value > 12 MPa with a failure mechanism of 100 % cohesive (100C) failure. Accordingly, all of the exemplified adhesive compositions according to the first aspect of the invention perform well when subjected to Aluminium Lap Shear Strength testing.

In this connection, adhesives according to the invention display cohesive failure (i.e. within the body of the adhesive itself) rather than adhesive failure (i.e. failure at the adhesive-substrate interface). It is generally accepted by those skilled in the art that cohesive failure is preferable to adhesive failure, as adhesive failure demonstrates a deficiency in the adhesive's ability to bond to the substrate, a deficiency that may cause the bond to fail under more aggressive conditions.

## Claims

1. An adhesive composition for a multi-part adhesive system, the adhesive composition being curable via free radical polymerisation and comprising:
(A) a (meth)acrylate ester monomer;
(B) from 1.0 to 7.0 wt. %, based on the total weight of the adhesive composition, of a urethane (meth)acrylate oligomer;
(C) from 0.5 to 6.0 wt. %, based on the total weight of the adhesive composition, of an organoclay;
(D) a trivalent organophosphorus compound; and
(E) an anti-tack agent for forming a film on the surface of the adhesive composition, wherein the anti-tack agent is a wax.

2. The adhesive composition according to claim 1, wherein the (meth)acrylate monomer is present, based on the total weight of the adhesive composition, in an amount of at least 40 wt. %, preferably at least 50 wt. %, such as at least 55 wt. %, such as at least 58 wt. %.

3. The adhesive composition according to either claim 1 or claim 2, wherein the urethane (meth)acrylate oligomer is present, based on the total weight of the adhesive composition, in an amount from 1.0 to 6.5 wt. %, such as from 1.0 to 6.0 wt. %, and more preferably from 1.5 to 6.5 wt. %, such as from 1.5 to 6.0 wt. %.

4. The adhesive composition according to any one of claims 1 to 3, wherein the organoclay is present, based on the total weight of the adhesive composition, in an amount from 0.5 to 5.5 wt. %, such as from 0.5 to 4.5 wt. %, such as from 0.5 to 3.5 wt. %, and more preferably from 1.0 to 5.5 wt. %, such as from 1.0 to 4.5 wt. %, such as from 1.0 to 3.5 wt. % such as from 1.0 to 3.0 wt. %.

5. The adhesive composition according to any one of claims 1 to 4, wherein the trivalent organophosphorus compound is present, based on the total weight of the adhesive composition, in an amount from 0.05 wt. % to 2.0 wt. %, more preferably from 0.05 wt. % to 0.75 wt. %, and even more preferably from 0.05 wt. % to 0.50 wt. %.

6. The adhesive composition according to any one of claims 1 to 5, wherein the anti-tack agent is present, based on the total weight of the adhesive composition, in an amount from 0.5 to 4.0 wt. %, and more preferably from 1.0 to 3.0 wt. %, and even more preferably from 1.0 to 2.5 wt. %

7. The adhesive composition according to any one of claims 1 to 6, wherein the (meth)acrylate ester monomer (A) comprises at least one (meth)acrylate ester of a C₁-C₄ monofunctional alcohol; and optionally wherein the (meth)acrylate ester monomer (A) comprises methylmethacrylate.

8. The adhesive composition according to any one of claims 1 to 7, wherein the urethane (meth)acrylate oligomer is the reaction product of:
(i) a di- or higher isocyanate having at least two isocyanate groups;
(ii) a chain-extending reagent which has at least two groups selected from hydroxyl and/or amino groups, each capable of reaction with an isocyanate group of (i);
(iii) a hydroxymethacrylate component or a hydroxyacrylate component.

9. The adhesive composition according to any one of claims 1 to 8, wherein the organoclay is selected from an organically modified smectite clay, an organically modified bentonite clay or a mixed mineral organoclay; and optionally wherein:
(a) the organoclay is a mixed mineral organoclay, and wherein the mixed mineral organoclay comprises benzalkonium sepiolite and benzalkonium montmorillonite; or
(b) the organoclay is an organically modified bentonite clay, and the organically modified bentonite clay comprises stearalkonium bentonite.

10. The adhesive composition according to any one of claims 1 to 9, wherein the trivalent organophosphorus compound is a phosphine or a phosphite; and optionally wherein:
(a) the trivalent organophosphorus compound is a phosphine of the formula: 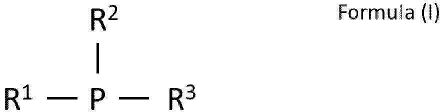 wherein P represents a phosphorus atom, and wherein R¹, R² and R³ are independently selected from an alkyl group, an alkyl ether group, a cycloalkyl group or an aryl group; or
(b) the trivalent organophosphorus compound is a phosphite of the formula: 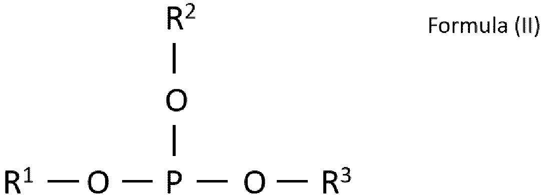 wherein P represents a phosphorus atom, and wherein R¹, R² and R³ are independently selected from an alkyl group, an alkyl ether group, a cycloalkyl group or an aryl group; or
(c) the trivalent organophosphorus compound is a phosphine or a phosphite selected from triphenyl phosphine, trioctyl phosphine, triphenyl phosphite, tetraphenyl dipropyleneglycol diphosphite, poly(dipropyleneglycol) phenyl phosphite, C₁₂-C₁₅ alkyl bisphenol A phosphite, tris(tridecyl) phosphite, and 3,9-bis(octadecyloxy)-2,4,8,10-tetraoxa-3,9-diphosphaspiro[5.5]undecane.

11. The adhesive composition according to any one of claims 1 to 10, wherein the anti-tack agent is a paraffin wax; and optionally wherein the paraffin wax has a melting point of ≤ 65°C.

12. A multi-part adhesive system comprising a plurality of parts, which in combination contains the adhesive composition as defined in any one of claims 1 to 11 together with
(I) a component capable of initiating free radical polymerisation of the adhesive composition; and
(P) a component capable of promoting the polymerisation,
wherein (I) and (P), and optionally the adhesive composition as defined in any one of claims 1 to 11, are contained in different respective parts of the multi-part adhesive system.

13. A two-part adhesive system comprising first and second parts, which in combination contains the adhesive composition as defined in any one of claims 1 to 11 together with
(I) a component capable of initiating free radical polymerisation of the adhesive composition; and
(P) a component capable of promoting the polymerisation,
wherein (I) and (P) are contained in different respective parts of the two-part adhesive system.

14. The multi-part adhesive system according to claim 12 or the two-part adhesive system according to claim 13, wherein the component (P) is an amine and wherein the component (I) is a peroxide.

## Patentansprüche

1. Klebstoffzusammensetzung für ein Mehrkomponenten-Klebstoffsystem, wobei die Klebstoffzusammensetzung über freie radikalische Polymerisation härtbar ist und Folgendes umfasst:
(A) ein (Meth)acrylatestermonomer;
(B) 1,0 bis 7,0 Gew.-%, bezogen auf das Gesamtgewicht der Klebstoffzusammensetzung, eines Urethan(meth)acrylat-Oligomers;
(C) 0,5 bis 6,0 Gew.-%, bezogen auf das Gesamtgewicht der Klebstoffzusammensetzung, eines Organo-Tons;
(D) eine dreiwertige Organophosphorverbindung; und
(E) ein Anti-Haftmittel zum Ausbilden einer Folie auf der Oberfläche der Klebstoffzusammensetzung, wobei das Anti-Haftmittel ein Wachs ist.

2. Klebstoffzusammensetzung nach Anspruch 1, wobei das (Meth)acrylatmonomer in einer Menge von zumindest 40 Gew.-%, vorzugsweise zumindest 50 Gew.-%, wie z. B. zumindest 55 Gew.-%, wie z. B. zumindest 58 Gew.-%, bezogen auf das Gesamtgewicht der Klebstoffzusammensetzung, vorhanden ist.

3. Klebestoffzusammensetzung nach Anspruch 1 oder Anspruch 2, wobei das Urethan-(meth)acrylatmonomer in einer Menge von 1,0 bis 6,5 Gew.-%, wie z. B. von 1,0 bis 6,0 Gew.-%, und noch bevorzugter von 1,5 bis 6,5 Gew.-%, wie z. B. von 1,5 bis 6,0 Gew.-%, bezogen auf das Gesamtgewicht der Klebstoffzusammensetzung, vorhanden ist.

4. Klebstoffzusammensetzung nach einem der Ansprüche 1 bis 3, wobei der Organo-Ton in einer Menge von 0,5 bis 5,5 Gew.-%, wie z. B. von 0,5 bis 4,5 Gew.-%, wie z. B. von 0,5 bis 3,5 Gew.-%, und noch bevorzugter von 1,0 bis 5,5 Gew.-%, wie z. B. von 1,0 bis 4,5 Gew.-%, wie z. B. von 1,0 bis 3,5 Gew.-%, wie z. B. von 1,0 bis 3,0 Gew.-%, bezogen auf das Gesamtgewicht der Klebstoffzusammensetzung, vorhanden ist.

5. Klebstoffzusammensetzung nach einem der Ansprüche 1 bis 4, wobei die dreiwertige Organophosphorverbindung in einer Menge von 0,05 Gew.-% bis 2,0 Gew.-%, noch bevorzugter von 0,05 Gew.-% bis 0,75 Gew.-% und sogar noch bevorzugter von 0,05 Gew.-% bis 0,50 Gew.-%, bezogen auf das Gesamtgewicht der Klebstoffzusammensetzung, vorhanden ist.

6. Klebstoffzusammensetzung nach einem der Ansprüche 1 bis 5, wobei das Anti-Haftmittel in einer Menge von 0,5 bis 4,0 Gew.-% und noch bevorzugter von 1,0 bis 3,0 Gew.-% und sogar noch bevorzugter von 1,0 bis 2,5 Gew.-%, bezogen auf das Gesamtgewicht der Klebstoffzusammensetzung, vorhanden ist.

7. Klebstoffzusammensetzung nach einem der Ansprüche 1 bis 6, wobei das (Meth)-acrylatestermonomer (A) zumindest einen (Meth)acrylatester eines monofunktionellen C₁₋₄-Alkohols umfasst; und wobei das (Meth)acrylatestermonomer (A) gegebenenfalls Methylmethacrylat umfasst.

8. Klebstoffzusammensetzung nach einem der Ansprüche 1 bis 7, wobei das Urethan-(meth)acrylat-Oligomer das Reaktionsprodukt aus Folgenden ist:
(i) einem di- oder höheren Isocyanat, das zumindest zwei Isocyanatgruppen aufweist;
(ii) einem Kettenerweiterungsreagens, das zumindest zwei Gruppen aufweist, die aus Hydroxyl- und/oder Aminogruppen ausgewählt sind, von denen jede zur Reaktion mit einer Isocyanatgruppe aus (i) in der Lage ist;
(iii) einer Hydroxymethacrylatkomponente oder einer Hydroxyacrylatkomponente.

9. Klebstoffzusammensetzung nach einem der Ansprüche 1 bis 8, wobei der Organo-Ton aus einem organisch modifizierten Smektitton, einem organisch modifizierten Bentonitton oder einem gemischten mineralischen Organo-Ton ausgewählt ist; und wobei gegebenenfalls:
(a) der Organo-Ton ein gemischter mineralischer Organo-Ton ist und wobei der gemischte mineralische Organo-Ton Benzalkoniumsepiolit und Benzalkoniummontmorillonit umfasst; oder
(b) der Organo-Ton ein organisch modifizierter Bentonitton ist und der organisch modifizierte Bentonitton Stearalkoniumbentonit umfasst.

10. Klebstoffzusammensetzung nach einem der Ansprüche 1 bis 9, wobei die dreiwertige Organophosphorverbindung ein Phosphin oder ein Phosphit ist; und wobei gegebenenfalls:
(a) die dreiwertige Organophosphorverbindung ein Phosphin der folgenden Formel ist: 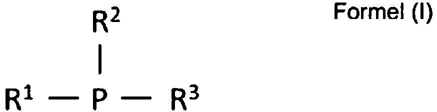 worin P für ein Phosphoratom steht und worin R¹, R² und R³ unabhängig aus einer Alkylgruppe, einer Alkylethergruppe, einer Cycloalkylgruppe oder einer Arylgruppe ausgewählt sind; oder
(b) die dreiwertige Organophosphorverbindung ein Phosphit der folgenden Formel ist: 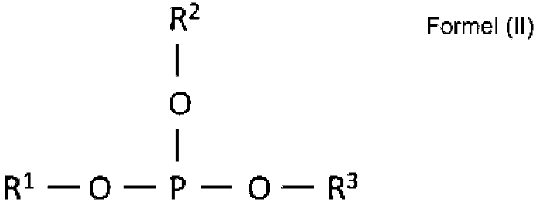 worin P für ein Phosphoratom steht und worin R¹, R² und R³ unabhängig aus einer Alkylgruppe, einer Alkylethergruppe, einer Cycloalkylgruppe oder einer Arylgruppe ausgewählt sind; oder
(c) die dreiwertige Organophosphorverbindung ein Phosphin oder ein Phosphit ist, ausgewählt aus Triphenylphosphin, Trioctylphosphin, Triphenylphosphit, Tetraphenyldipropylenglykoldiphosphit, Poly(dipropylenglykol)phenylphosphit, C₁₂₋₁₅-Alkylbisphenol-A-phosphit, Tris(tridecyl)phosphit und 3,9-Bis(octadecyloxy)-2,4,8,10-tetraoxa-3,9-diphosphaspiro[5.5]undecan.

11. Klebstoffzusammensetzung nach einem der Ansprüche 1 bis 10, wobei das Anti-Haftmittel ein Paraffinwachs ist; und wobei das Paraffinwachs gegebenenfalls einen Schmelzpunkt von ≤ 65 °C aufweist.

12. Mehrkomponenten-Klebstoffsystem, umfassend eine Vielzahl von Komponenten, die in Kombination eine Klebstoffzusammensetzung wie in einem der Ansprüche 1 bis 11 definiert zusammen mit:
(I) einer Komponente, die dazu in der Lage ist, die freie radikalische Polymerisation der Klebstoffzusammensetzung einzuleiten; und
(P) einer Komponente, die dazu in der Lage ist, die Polymerisation zu fördern, enthält,
wobei (I) und (P) und gegebenenfalls eine Klebstoffzusammensetzung wie in einem der Ansprüche 1 bis 11 definiert in verschiedenen entsprechenden Komponenten des Mehrkomponenten-Klebstoffsystems enthalten sind.

13. Zwei-Komponenten-Klebstoffsystem, umfassend eine erste und eine zweite Komponente, die in Kombination eine Klebstoffzusammensetzung wie in einem der Ansprüche 1 bis 11 definiert zusammen mit:
(I) einer Komponente, die dazu in der Lage ist, die freie radikalische Polymerisation der Klebstoffzusammensetzung einzuleiten; und
(P) einer Komponente, die dazu in der Lage ist, die Polymerisation zu fördern,
enthält,
wobei (I) und (P) in verschiedenen entsprechenden Komponenten des Zwei-Komponenten-Klebstoffsystems enthalten sind.

14. Mehrkomponenten-Klebstoffsystem nach Anspruch 12 oder Zwei-Komponenten-Klebstoffsystem nach Anspruch 13, wobei die Komponente (P) ein Amin ist und wobei die Komponente (I) ein Peroxid ist.

## Revendications

1. Composition adhésive pour un système adhésif en plusieurs parties, la composition adhésive étant durcissable par polymérisation radicalaire et comprenant :
(A) un monomère d'ester de (méth)acrylate ;
(B) de 1,0 à 7,0 % en poids, sur la base du poids total de la composition adhésive, d'un oligomère de (méth)acrylate d'uréthane ;
(C) de 0,5 à 6,0 % en poids, sur la base du poids total de la composition adhésive, d'une argile organique ;
(D) un composé organophosphoré trivalent ; et
(E) un agent anti-collant pour former un film sur la surface de la composition adhésive, dans lequel l'agent anti-collant est une cire.

2. Composition adhésive selon la revendication 1, dans laquelle le monomère de (méth)acrylate est présent, sur la base du poids total de la composition adhésive, en une quantité d'au moins 40 % en poids, de préférence d'au moins 50 % en poids, comme d'au moins 55 % en poids, comme d'au moins 58 % en poids.

3. Composition adhésive selon la revendication 1 ou la revendication 2, dans laquelle l'oligomère de (méth)acrylate d'uréthane est présent, sur la base du poids total de la composition adhésive, en une quantité de 1,0 à 6,5 % en poids, comme de 1,0 à 6,0 % en poids, et plus préférablement de 1,5 à 6,5 % en poids, comme de 1,5 à 6,0 % en poids.

4. Composition adhésive selon l'une quelconque des revendications 1 à 3, dans laquelle l'argile organique est présente, sur la base du poids total de la composition adhésive, en une quantité de 0,5 à 5,5 % en poids, comme de de 0,5 à 4,5 % en poids, comme de 0,5 à 3,5 % en poids, et de manière plus préférée de 1,0 à 5,5 % en poids, comme de 1,0 à 4,5 % en poids, comme de 1,0 à 3,5 % en poids, comme de 1,0 à 3,0 % en poids.

5. Composition adhésive selon l'une quelconque des revendications 1 à 4, dans laquelle le composé organophosphoré trivalent est présent, sur la base du poids total de la composition adhésive, en une quantité de 0,05 % en poids à 2,0 % en poids, plus préférablement de 0,05 % en poids à 0,75 % en poids, et encore plus préférablement de 0,05 % en poids à 0,50 % en poids.

6. Composition adhésive selon l'une quelconque des revendications 1 à 5, dans laquelle l'agent anti-collant est présent, sur la base du poids total de la composition adhésive, en une quantité de 0,5 à 4,0 % en poids, et plus préférablement de 1,0 à 3,0 % en poids, et encore plus préférablement de 1,0 à 2,5 % en poids.

7. Composition adhésive selon l'une quelconque des revendications 1 à 6, dans laquelle le monomère d'ester de (méth)acrylate (A) comprend au moins un ester de (méth)acrylate d'un alcool monofonctionnel en C₁-C₄ ; et facultativement dans laquelle le monomère d'ester de (méth)acrylate (A) comprend du méthacrylate de méthyle.

8. Composition adhésive selon l'une quelconque des revendications 1 à 7, dans laquelle l'oligomère de (méth)acrylate d'uréthane est le produit de réaction de :
(i) un di-isocyanate ou supérieur présentant au moins deux groupes isocyanate ;
(ii) un réactif d'extension de chaîne qui présente au moins deux groupes choisis parmi des groupes hydroxyle et/ou amino, chacun étant capable de réagir avec un groupe isocyanate de (i) ;
(iii) un composant hydroxyméthacrylate ou un composant hydroxyacrylate.

9. Composition adhésive selon l'une quelconque des revendications 1 à 8, dans laquelle l'argile organique est choisie parmi une argile de smectite modifiée organiquement, une argile de bentonite modifiée organiquement ou une argile organique minérale mixte ; et facultativement dans laquelle :
(a) l'argile organique est une argile organique minérale mixte, et dans laquelle l'argile organique minérale mixte comprend de la sépiolite de benzalkonium et de la montmorillonite de benzalkonium ; ou
(b) l'argile organique est une argile de bentonite modifiée organiquement, et l'argile de bentonite modifiée organiquement comprend de la bentonite de stéaralkonium.

10. Composition adhésive selon l'une quelconque des revendications 1 à 9, dans laquelle le composé organophosphoré trivalent est une phosphine ou un phosphite ; et facultativement dans laquelle :
(a) le composé organophosphoré trivalent est une phosphine de la formule : 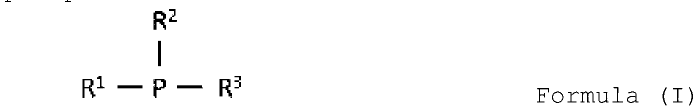 dans laquelle P représente un atome de phosphore, et dans laquelle R¹, R ² et R³ sont choisis indépendamment parmi un groupe alkyle, un groupe éther d'alkyle, un groupe cycloalkyle ou un groupe aryle ; ou
(b) le composé organophosphoré trivalent est un phosphite de formule : 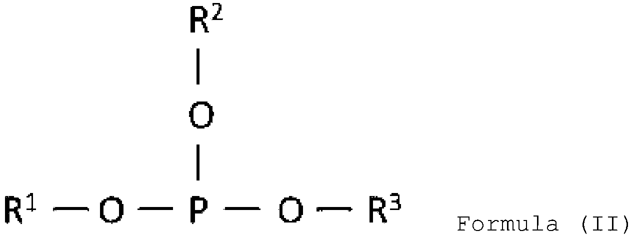 dans laquelle P représente un atome de phosphore, et dans laquelle R¹, R ² et R³ sont choisis indépendamment parmi un groupe alkyle, un groupe éther d'alkyle, un groupe cycloalkyle ou un groupe aryle ; ou
(c) le composé organophosphoré trivalent est une phosphine ou un phosphite choisi(e) parmi la triphénylphosphine, la trioctylphosphine, le phosphite de triphényle, le diphosphite de tétraphényl dipropylèneglycol, le phosphite de poly(dipropylèneglycol) phényle, le phosphite de bisphénol A d'alkyle en C₁₂-C₁₅, le phosphite de tris(tridécyle) et le 3,9-bis(octadécyloxy)-2,4,8,10-tétraoxa-3,9-diphosphaspiro[5.5]undécane.

11. Composition adhésive selon l'une quelconque des revendications 1 à 10, dans laquelle l'agent anti-collant est une cire de paraffine ; et facultativement dans laquelle la cire de paraffine présente un point de fusion ≤ 65°C.

12. Système adhésif en plusieurs parties comprenant une pluralité de parties, qui contient en combinaison la composition adhésive selon l'une quelconque des revendications 1 à 11 avec
(I) un composant capable d'initier une polymérisation radicalaire de la composition adhésive ; et
(P) un composant capable de favoriser la polymérisation,
dans lequel (I) et (P), et facultativement la composition adhésive selon l'une quelconque des revendications 1 à 11, sont contenus dans différentes parties respectives du système adhésif en plusieurs parties.

13. Système adhésif en deux parties comprenant des première et seconde parties, qui contient en combinaison la composition adhésive selon l'une quelconque des revendications 1 à 11 avec
(I) un composant capable d'initier une polymérisation radicalaire de la composition adhésive ; et
(P) un composant capable de favoriser la polymérisation,
dans lequel (I) et (P) sont contenus dans différentes parties respectives du système adhésif en deux parties.

14. Système adhésif en plusieurs parties selon la revendication 12 ou système adhésif en deux parties selon la revendication 13, dans lequel le composant (P) est une amine et dans lequel le composant (I) est un peroxyde.
